# EUROPEAN PATENT APPLICATION

(11) **EP 4 456 591 A1**
(43) Date of publication of application: **30.10.2024**
(21) Application number: 21968554.2
(22) Date of filing: 22.12.2021
(51) Int. Cl.: H04W 24/00

(54) **MEASUREMENT CAPABILITY INFORMATION GENERATION METHOD AND APPARATUS**

(71) Applicant: Beijing Xiaomi Mobile Software Co., Ltd., Beijing 100085 (CN)
(72) Inventor: XIONG, Yi, Beijing 100085 (CN)
(74) Representative: Dehns Germany Partnerschaft mbB
(86) International application number: PCT/CN2021/140581
(87) International publication number: WO 2023/115405

(57) **Abstract**

Disclosed in embodiments of the present application are a measurement capability information generation method and apparatus. Measurement capability information is generated, the measurement capability information being used for indicating a terminal device capability of a terminal device related to a synchronization signal block measurement timing configuration (SMTC) and/or a measurement gap (MG). Therefore, different terminal devices can realize balance between the computing processing capability, the power consumption and the mobility management performance according to their own restrictions and requirements, so as to obtain more accurate measurement configurations that are more suitable for the terminal devices. The communication efficiency of a communication system is effectively improved.

## Description

### TECHNICAL FIELD

The disclosure relates to the field of communication technology, in particular, to methods and apparatuses for generating measurement capability information and for a measurement configuration.

### BACKGROUND

The Fifth Generation (5G) New Radio (NR) system introduces Non-terrestrial networks (NTN), i.e., a 5G satellite communication network. Considering that the high altitude of a satellite from the earth will cause a relatively high transmission delay of the NTN network, when a terminal needs to perform neighbor cell measurement, the terminal needs to consider the difference in transmission delays between the terminal and different satellites. In this case, the terminal may need multiple measurement window configurations, and each configuration is associated with a group of cells or with one satellite.

### SUMMARY

Embodiments of the first aspect of the disclosure provide a method for generating measurement capability information. The method is performed by a terminal device, and the method includes:
generating measurement capability information, in which the measurement capability information is used to indicate terminal device capability(capabilities) of the terminal device related to a Synchronization Signal Block Measurement Timing Configuration (SMTC) and/or a Measurement Gap (MG).

In some examples, the measurement capability information includes at least one of the following:
first capability information configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a non-terrestrial network (NTN);
sixth capability information, configured to indicate maximum total length information of the SMTC and/or MG supported by the terminal device;
seventh capability information, configured to indicate whether the terminal device supports an activation and/or a deactivation of a SMTC and/or MG configuration.

In some examples, the first capability information is at least configured to:
indicate the number of parallel configured SMTCs and/or MGs supported by the terminal device; and/or
indicate the number of parallel used SMTCs and/or MGs supported by the terminal device.
In some examples, the second capability information is at least configured to:
indicate whether the terminal device supports to configure in parallel the first number of SMTCs and/or MGs; and/or
indicate whether the terminal device supports to use in parallel the first number of SMTCs and/or MGs.

In some examples, the third capability information is at least configured to:
indicate whether the terminal device supports to configure in parallel an additional SMTC and/or MG; and/or
indicate whether the terminal device supports to use in parallel an additional SMTC and/or MG.

In some examples, the first capability information is also configured to:
indicate the number of SMTCs supported by the terminal device corresponding to at least one type of SMTC period supported by the terminal device; and/or indicate the number of MGs supported by the terminal device corresponding to at least one type of MG period supported by the terminal device; and/or
indicate the number of SMTCs supported by the terminal device corresponding to at least one type of SMTC length supported by the terminal device; and/or indicate the number of MGs supported by the terminal device corresponding to at least one type of MG length supported by the terminal device.

In some examples, the second capability information is also configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

In some examples, the third capability information is also configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or,
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

In some examples, the sixth capability information is at least configured to:
indicate the maximum total length information of parallel configured SMTCs and/or the maximum total length information of parallel configured MGs supported by the terminal device; and/or
indicate the maximum total length information of parallel used SMTCs and/or the maximum total length information of parallel used MGs supported by the terminal device.

In some examples, the total length information includes at least one of a total length or a total length proportion.

In some examples, the total length proportion is configured to indicate a proportion of the maximum total length of the SMTC or MG supported by the terminal device to a specified duration.

In some examples, the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

In some examples, the number of SMTCs is configured per measured object or per measurement frequency; the number of MGs is configured per terminal device, or the number of MGs is configured for a frequency band (FR1) or for another frequency band (FR2).

In some examples, the method also includes:
sending information on the terminal device capability(capabilities) to the network device, in which the information on the terminal device capability(capabilities) includes at least one terminal device capability information element (IE); and
the measurement capability information is included in the at least one terminal equipment capability IE; or, the measurement capability information is used as a terminal equipment capability IE.

In some examples, the method further includes: sending assistant information to a network device, in which the assistant information includes the measurement capability information.

In some examples, the method further includes: receiving a measurement configuration sent by a network device, in which the measurement configuration is determined by the network device based on the measurement capability information.

In some examples, the method further includes: in response to the measurement configuration not meeting the terminal device capability(capabilities), sending an indication to the network device, in which the indication is used for requesting the network device to reconfigure the measurement configuration.

Embodiments of a second aspect of the disclosure provide a method for generating measurement capability information. The method is performed by a network device. The method includes:
obtaining measurement capability information, in which the measurement capability information is configured to indicate terminal device capability(capabilities) of a terminal device related to a Synchronization Signal Block Measurement Timing Configuration (SMTC) and/or a Measurement Gap (MG); and
determining a measurement configuration of the terminal device based on the measurement capability information.

In some examples, the measurement capability information includes at least one of the following:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a non-terrestrial network (NTN);
sixth capability information, configured to indicate maximum total length information of the SMTC and/or MG supported by the terminal device;
seventh capability information, configured to indicate whether the terminal device supports an activation and/or a deactivation of an SMTC and/or MG configuration.

In some examples, the first capability information is at least configured to:
indicate the number of parallel configured SMTCs and/or MGs supported by the terminal device; and/or
indicate the number of parallel used SMTCs and/or MGs supported by the terminal device.

In some examples, the second capability information is at least configured to:
indicate whether the terminal device supports to configure in parallel the first number of SMTCs and/or MGs; and/or
indicate whether the terminal device supports to use in parallel the first number of SMTCs and/or MGs.

In some examples, the third capability information is at least configured to:
indicate whether the terminal device supports to configure in parallel an additional SMTC and/or MG; and/or
indicate whether the terminal device supports to use in parallel an additional SMTC and/or MG.

In some examples, the first capability information is also configured to:
indicate the number of SMTCs supported by the terminal device corresponding to at least one type of SMTC period supported by the terminal device; and/or indicating the number of MGs supported by the terminal device corresponding to at least one type of MG period supported by the terminal device; and/or
indicate the number of SMTCs supported by the terminal device corresponding to at least one type of SMTC length supported by the terminal device; and/or indicating the number of MGs supported by the terminal device corresponding to at least one type of MG length supported by the terminal device.

In some examples, the second capability information is also configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

In some examples, the third capability information is also configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

For example, the sixth capability information is at least configured to:
indicate the maximum total length information of the parallel configured SMTCs and/or the maximum total length information of the parallel configured MGs supported by the terminal device; and/or
indicate the maximum total length information of the parallel used SMTCs and/or the maximum total length information of the parallel used MGs supported by the terminal device.

In some examples, the total length information includes at least one of a total length or a total length proportion.

In some examples, the total length proportion is configured to indicate a proportion of the maximum total length of the SMTC or MG supported by the terminal device to a specified duration.

In some examples, the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

In some examples, the number of SMTCs is configured per measured object or per measurement frequency; the number of MGs is configured per terminal device, or the number of MGs is configured for a frequency band (FR1) or for another frequency band (FR2).

In some examples, obtaining the measurement capability information includes:
receiving information on the terminal device capability(capabilities) sent by the terminal device, in which the information on the terminal device capability(capabilities) includes at least one terminal device capability information element (IE); and
the measurement capability information is included in the at least one terminal equipment capability IE; or the measurement capability information is used as a terminal equipment capability IE.

In some examples, obtaining the measurement capability information includes: receiving assistant information sent by the terminal device, in which the assistant information includes the measurement capability information.

In some examples, the method further includes: sending the measurement configuration to the terminal device.

In some examples, the method further includes: in response to the measurement configuration not meeting the terminal device capability(capabilities), receiving an indication sent by the terminal device, in which the indication is used for requesting the network device to reconfigure the measurement configuration.

Embodiments of a third aspect of the disclosure provide an apparatus for generating measurement capability information. The apparatus is applied to a terminal device. The apparatus includes:
a processing unit, configured to generate measurement capability information, in which the measurement capability information is configured to indicate terminal device capability(capabilities) of a terminal device related to a Synchronization Signal Block Measurement Timing Configuration (SMTC) and/or a Measurement Gap (MG).

In some examples, the measurement capability information includes at least one of the following:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a non-terrestrial network (NTN);
sixth capability information, configured to indicate maximum total length information of the SMTC and/or MG supported by the terminal device; or
seventh capability information, configured to indicate whether the terminal device supports an activation and/or a deactivation of an SMTC and/or MG configuration.

In some examples, the first capability information is at least configured to:
indicate a number of parallel configured SMTCs and/or MGs supported by the terminal device; and/or
indicates a number of parallel used SMTCs and/or MGs supported by the terminal device.

In some examples, the second capability information is at least configured to:
indicate whether the terminal device supports to configure in parallel the first number of SMTCs and/or MGs; and/or
indicate whether the terminal device supports to use in parallel the first number of SMTCs and/or MGs.

In some examples, the third capability information is at least configured to:
indicate whether the terminal device supports to configure in parallel the additional SMTC and/or MG; and/or
indicate whether the terminal device supports to use in parallel the additional SMTC and/or MG.

In some examples, the first capability information is also configured to:
indicate a number of SMTCs supported by the terminal device corresponding to at least one type of SMTC period supported by the terminal device; and/or indicate a number of SMTCs supported by the terminal device corresponding to at least one type of MG period supported by the terminal device; and/or,
indicate a number of SMTCs supported by the terminal device corresponding to at least one type of SMTC length supported by the terminal device; and/or indicate a number of MGs supported by the terminal device corresponding to at least one type of MG length supported by the terminal device.

In some examples, the second capability information is also configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

In some examples, the third capability information is also configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

In some examples, the sixth capability information is at least configured to:
indicate the maximum total length information of the parallel configured SMTCs and/or the parallel configured MGs supported by the terminal device; and/or
indicate the maximum total length information of the parallel used SMTCs and/or the parallel used MGs supported by the terminal device.

In some examples, the total length information includes at least one of a total length or a total length proportion.

In some examples, the total length proportion is configured to indicate a proportion of the maximum total length of the SMTC or MG supported by the terminal device to a specified duration.

In some examples, the seventh capability information is at least configured to:
indicate whether the terminal device supports a network device-configured activation and/or a deactivation of the SMTC and/or MG configuration; and/or
indicate whether the terminal device supports a self-activation and/or deactivation of the SMTC and/or MG configuration.

In some examples, the number of SMTCs is configured per measured object or per measurement frequency; the number of MGs is configured per terminal device, or the number of MGs is configured for a frequency band (FR1) or for another frequency band (FR2).

In some examples, the apparatus also includes:
a transceiver unit, configured to send information on the terminal device capability(capabilities) to the network device, in which the information on the terminal device capability(capabilities) includes at least one terminal device capability information element (IE); and
the measurement capability information is included in the at least one terminal equipment capability IE; or the measurement capability information is used as a terminal equipment capability IE.

In some examples, the transceiver unit is further configured to: send assistant information to a network device, in which the assistant information includes the measurement capability information.

In some examples, the apparatus further includes: a transceiver unit, configured to receive a measurement configuration sent by a network device, in which the measurement configuration is determined by the network device based on the measurement capability information.

In some examples, the transceiver unit is further configured to: send an indication to the network device in response to the measurement configuration not satisfying the terminal device capability(capabilities), in which the indication used for requesting the network equipment to reconfigure the measurement configuration described above.

Embodiments of a fourth aspect of the disclosure provide an apparatus for generating measurement capability information. The apparatus is applied to a network device. The apparatus includes:
a transceiver unit, configured to obtain measurement capability information, in which the measurement capability information is configured to indicate terminal device capability(capabilities) of a terminal device related to a Synchronization Signal Block Measurement Timing Configuration (SMTC) and/or a Measurement Gap (MG); and
a processing unit, configured to determine the measurement configuration of the terminal device based on the measurement capability information.

In some examples, the measurement capability information includes at least one of the following:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a non-terrestrial network (NTN);
sixth capability information, configured to indicate maximum total length information of the SMTC and/or MG supported by the terminal device; or
seventh capability information, configured to indicate whether the terminal device supports an activation and/or a deactivation of an SMTC and/or MG configuration.

In some examples, the first capability information is at least configured to:
indicate the number of parallel configured SMTCs and/or MGs supported by the terminal device; and/or
indicates the number of parallel used SMTCs and/or MGs supported in parallel by the terminal device.

In some examples, the second capability information is at least configured to:
indicate whether the terminal device supports to configure in parallel the first number of SMTCs and/or MGs; and/or
indicate whether the terminal device supports to use in parallel the first number of SMTCs and/or MGs.

In some examples, the third capability information is at least configured to:
indicate whether the terminal device supports to configure in parallel an additional SMTC and/or MG; and/or
indicate whether the terminal device supports to use in parallel an additional SMTC and/or MG.

In some examples, the first capability information is also configured to:
indicate the number of SMTCs supported by the terminal device corresponding to at least one type of SMTC period supported by the terminal device; and/or indicate the number of MGs supported by the terminal device corresponding to at least one type of MG period supported by the terminal device; and/or
indicate the number of SMTCs supported by the terminal device corresponding to at least one type of SMTC length supported by the terminal device; and/or indicate the number of MGs supported by the terminal device corresponding to at least one type of MG length supported by the terminal device.

In some examples, the second capability information is also configured to:
indicate whether the terminal support supports the first number of SMTCs per type of SMTC period of at least one type of SMTC period supported by the terminal device; and/or indicate the number of MGs supported by the terminal device per type of MG period of at least one type of MG period supported by the terminal device; and/or
indicate whether the terminal support supports the first number of MGs per type of SMTC length of at least one type of SMTC length supported by the terminal device; and/or indicate the number of MGs supported by the terminal device per type of MG length of at least one type of MG length supported by the terminal device.

In some examples, the third capability information is also configured to:
indicate whether the terminal support supports the additional SMTC per type of SMTC period of at least one type of SMTC period supported by the terminal device; and/or indicate the number of MGs supported by the terminal device per type of MG period of at least one type of MG period supported by the terminal device; and/or
indicate whether the terminal support supports the additional MG per type of SMTC length of at least one type of SMTC length supported by the terminal device; and/or indicate the number of MGs supported by the terminal device per type of MG length of at least one type of MG length supported by the terminal device.

In some examples, the sixth capability information is at least configured to:
indicate the maximum total length information of the parallel configured SMTCs and/or the maximum total length information of the parallel configured MGs supported by the terminal device; and/or
indicate the maximum total length information of the parallel used SMTCs and/or the maximum total length information of the parallel used MGs supported by the terminal device.

In some examples, the total length information includes at least one of a total length or a total length proportion.

In some examples, the total length proportion is configured to indicate a proportion of the maximum total length of the SMTC or MG supported by the terminal device to a specified duration.

In some examples, the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

In some examples, the number of SMTCs is configured per measured object or per measurement frequency; the number of MGs is configured per terminal device, or the number of MGs is configured for a frequency band (FR1) or another frequency band (FR2).

In some examples, the transceiver unit is configured to:
receive information on the terminal device capability(capabilities) sent by the terminal device, in which the information on the terminal device capability(capabilities) includes at least one terminal device capability information element (IE); and
the measurement capability information is included in the at least one terminal equipment capability IE; or, the measurement capability information is used as a terminal equipment capability IE.

In some examples, the transceiver unit is configured to: receive assistant information sent by the terminal device, in which the assistant information includes the measurement capability information.

In some examples, the transceiver unit is further configured to send the measurement configuration to the terminal device.

In some examples, the transceiver unit is further configured to: receive an indication sent by the terminal device in response to the measurement configuration not meeting the terminal device capability(capabilities), in which the indication is used for requesting the network device to reconfigure the measurement configuration.

Embodiments of a fifth aspect of the disclosure provide a communication device. The communication device includes a processor and a memory. The memory has a computer program stored therein. When the processor executes the computer program stored in the memory, the device is caused to perform the methods for generating measurement capability information according to embodiments of the first aspect.

Embodiments of a fifth aspect of the disclosure provide a communication device. The communication device includes a processor and a memory. The memory has a computer program stored therein. When the processor executes the computer program stored in the memory, the device is caused to perform the methods for a measurement configuration according to embodiments of the second aspect.

Embodiment of a seventh aspect of the disclosure provide a communication device. The device includes a processor and an interface circuit. The interface circuit is configured to receive code instructions and transmit the code instructions to the processor. The processor is configured to run the code instructions to cause the device to perform the methods for generating measurement capability information described in embodiments of the first aspect.

Embodiment of a seventh aspect of the disclosure provide a communication device. The device includes a processor and an interface circuit. The interface circuit is configured to receive code instructions and transmit the code instructions to the processor. The processor is configured to run the code instructions to cause the device to perform the methods for a measurement configuration information described in embodiments of the second aspect.

Embodiments of a ninth aspect of the disclosure provide a computer-readable storage medium, having instructions stored thereon. When the instructions are executed, the methods for generating measurement capability information according to embodiments of the first aspect are realized.

Embodiments of a ninth aspect of the disclosure provide a computer-readable storage medium, having instructions stored thereon. When the instructions are executed, the methods for a measurement configuration according to embodiments of the second aspect are realized.

Embodiments of an eleventh aspect of the disclosure provide a computer program. When the computer program runs on a computer, the computer is caused to perform the methods for generating measurement capability information according to embodiments of the first aspect.

Embodiments of an eleventh aspect of the disclosure provide a computer program. When the computer program runs on a computer, the computer is caused to perform the methods for measurement configuration according to embodiments of the second aspect.

With the methods and apparatus for generating measurement capability information according to embodiments of the disclosure, by generating the measurement capability information, in which the measurement capability information is configured to indicate the terminal device capability(capabilities) of the terminal device related to the SMTC and/or the MG, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

Additional aspects and advantages of the disclosure will be set forth in part in the description which follows, and in part will be clear from the description, or may be learned by practice of the disclosure.

### BRIEF DESCRIPTION OF THE DRAWINGS

In order to more clearly illustrate the technical solutions in embodiment of the disclosure or the background art, the following will describe drawings that need to be used in embodiments of the disclosure or the background art.
FIG. 1 is a schematic structural diagram illustrating a communication system according to embodiments of the disclosure.
FIG. 2 is a schematic flowchart illustrating a method for generating measurement capability information according to embodiments of the disclosure.
FIG. 3 is a schematic flowchart illustrating a method for generating measurement capability information according to embodiments of the disclosure.
FIG. 4 is a schematic flowchart illustrating a method for generating measurement capability information according to embodiments of the disclosure.
FIG. 5 is a schematic flowchart illustrating a method for generating measurement capability information according to embodiments of the disclosure.
FIG. 6 is a schematic flowchart illustrating a method for generating measurement capability information according to embodiments of the disclosure.
FIG. 7 is a schematic flowchart illustrating a method for generating measurement capability information according to embodiments of the disclosure.
FIG. 8 is a schematic flowchart illustrating a method for generating measurement capability information according to embodiments of the disclosure.
FIG. 9 is a schematic flowchart illustrating a method for generating measurement capability information according to embodiments of the disclosure.
FIG. 10 is a schematic flowchart illustrating a method for a measurement configuration according to embodiments of the disclosure.
FIG. 11 is a schematic flowchart illustrating a method for a measurement configuration according to embodiments of the disclosure.
Fig. 12 is a schematic structural diagram illustrating an apparatus for generating measurement capability information according to embodiments of the disclosure.
FIG. 13 is a schematic structural diagram illustrating an apparatus for a measurement configuration according to embodiments of the disclosure.
FIG. 14 is a schematic structural diagram illustrating a communication device according to embodiments of the disclosure.
FIG. 15 is a schematic structural diagram illustrating a chip according to embodiments of the disclosure.

### DETAILED DESCRIPTION

Reference will now be made in detail to exemplary embodiments, examples of which are illustrated in accompanying drawings. When the following description refers to the accompanying drawings, the same numerals in different drawings refer to the same or similar elements unless otherwise indicated. The implementations described in following exemplary embodiments do not represent all implementations consistent with embodiments of the disclosure. Rather, they are merely examples of apparatuses and methods consistent with aspects of embodiments of the disclosure as recited in the appended claims.

The terms used in embodiments of the disclosure are only for the purpose of describing specific embodiments and are not intended to limit embodiments of the disclosure. The singular forms "a/an" and "the" used in embodiments of the disclosure and the appended claims are also intended to include plural forms unless the context clearly indicates otherwise. It is understandable that the term "and/or" as used herein refers to and includes any and all possible combinations of one or more associated items listed here.

It is understandable that although embodiments of the disclosure may use terms such as "first", "second", and "third" to describe various information, such information should not be limited to these terms. These terms are only used to distinguish information of the same type from one another. For example, without departing from the scope of embodiments of the disclosure, first information may also be called second information, and similarly, second information may also be called first information. Depending on the context, the words "if" as used herein may be interpreted as "at" or "when" or "in response to determining."

Embodiments of the disclosure will be described in detail below, examples of which are illustrated in the accompanying drawings, wherein the same or similar reference numerals designate the same or similar elements throughout. Embodiments described below by referring to the accompanying drawings are examples, are intended to explain the disclosure, and should not be construed as limiting the disclosure.

In order to better understand a method for generating measurement capability information according to embodiments of the disclosure, the communication system to which embodiments of the disclosure apply will be firstly described below.

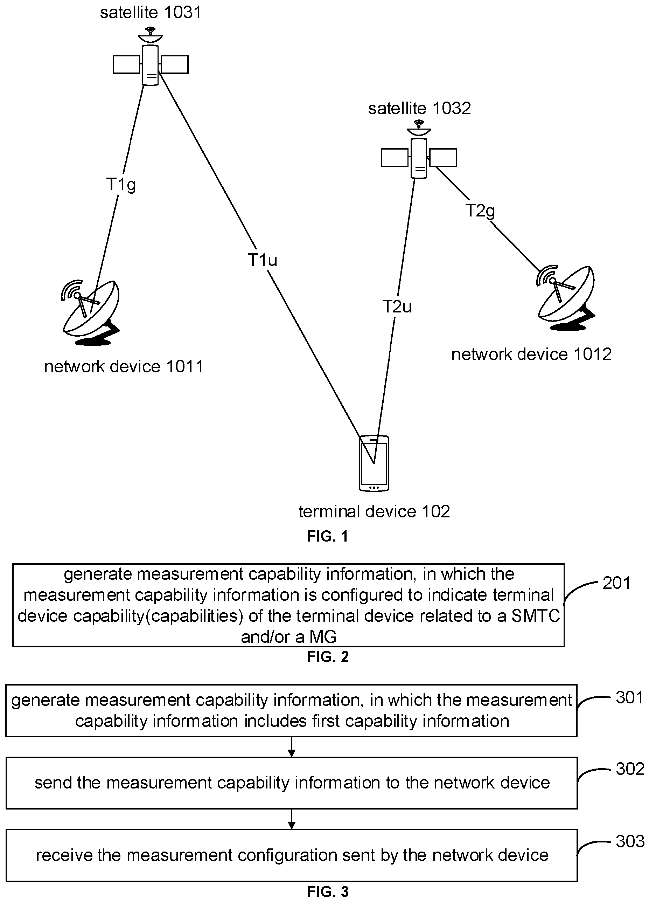

As illustrated in FIG. 1, FIG. 1 is a schematic structural diagram illustrating a communication system according to embodiments of the disclosure. The communication system may include, but is not limited to, one network device, one terminal device and one satellite. The number and configuration of devices illustrated in FIG. 1 are only examples and do not constitute a limitation to embodiments of the disclosure. In practical applications, two or more network devices, two or more terminal devices and two or more satellites may be included. The communication system illustrated in FIG. 1 may for example include two network devices 1011 and 1012, one terminal device 102, and two satellites 1031 and 1032.

It is noteworthy that the technical solutions according to embodiments of the disclosure may be applied to various communication systems, such as a Long Term Evolution (LTE) system, a Fifth Generation (5G) mobile communication system, a 5G New Radio system, or other future new mobile communication systems.

The network devices 1011 and 1012 in embodiments of the disclosure are entities on the network side for transmitting or receiving signals. For example, network devices 1011 and 1012 may be Evolved NodeB (eNB), Transmission Reception Points (TRPs), Next-Generation NodeB (gNB) in NR systems, base stations in other future mobile communication systems, or access nodes in a Wireless Fidelity (WiFi) system. The specific technology and specific device form adopted by the network device are not limited in embodiments of the disclosure. The network device according to embodiments of the disclosure may be composed of a Central Unit (CU) and Distributed Units (DU), The CU may also be called a Control Unit. Using the CU-DU structure may separate the network device, such as the protocol layer of the base station. Functions of some protocol layers are placed in the CU to be centrally controlled, and the remaining part or all of the functions of the protocol layer are distributed in the DUs, which are centrally controlled by the CU.

The terminal device 102 in embodiments of the disclosure is an entity on the user side for receiving or transmitting signals, such as a mobile phone. The terminal device may also be called terminal, user equipment (UE), Mobile Station (MS), Mobile Terminal (MT) and so on. The terminal device may be a vehicle with communication functions, a smart vehicle, a mobile phone, a wearable device, a tablet computer (Pad), a computer with a wireless transceiver function, a Virtual Reality (VR) terminal device, an Augmented Reality (AR) terminal device, a wireless terminal device in Industrial Control, a wireless terminal device in Self-Driving, a wireless terminal device in Remote Medical Surgery, a wireless terminal device in Smart Grid, a wireless terminal device in Transportation Safety, a wireless terminal device in Smart City, a wireless terminal devices in Smart Home, or the like. The specific technology and specific device form adopted by the terminal device are not limited in embodiments of the disclosure..

The 5G NR system introduces the Non-terrestrial networks (NTN), i.e., a 5G satellite communication network. Considering that the high altitude of a satellite from the earth will cause a relatively high transmission delay of the NTN network, there may be a large difference between a transmission delay of receiving a signal from a serving cell and a transmission delay of receiving a signal from a neighboring cell. As illustrated in FIG.1, the satellite 1031 is a satellite of the serving cell, the satellite 1032 is a satellite of the neighboring cell, the transmission delay of receiving by the terminal device 102 a signal of the serving cell is (T1g+T1u), and the transmission delay of receiving by the terminal device 102 a signal of the neighboring cell is (T2u+T2g), and the transmission delay difference is (T1g+T1u-(T2g+T2u)). Due to the different distances between different satellites and the terminal device and a ground network device, the transmission delay difference (T1g+T1u-(T2g+T2u)) may not approach 0 and may even be greater than a length of a measurement window of the terminal device.

When the terminal device 102 needs to perform a neighbor cell measurement, the difference in transmission delays between the terminal device and different satellites needs to be considered. Therefore, the terminal device 102 may need multiple measurement configurations, in which each configuration is associated with a group of cells or one satellite.

However, the more measurement configurations, the denser the signaling, the longer the terminal device monitors the cell, the higher the power consumption of the terminal device, and the lower the data receiving capability of the terminal device. Therefore, more measurement configurations are not friendly to terminal devices with low computing processing capabilities or high power consumption constraints. On the other hand, fewer measurement configurations may cause the terminal device to fail to detect enough neighboring satellites, resulting in more cell reselection and handover, which reduces the communication performance of the terminal device. In addition, the time when the terminal device monitors the measurement configurations is not only related to the number of measurement configurations, but also related to the length and period of the measurement configurations. Therefore, constraints of terminal device capabilities on the length and period of the measurement configuration need also be considered.

Different terminal devices have different capabilities and requirements and also have different requirements for the measurement configuration. Therefore, in the NTN, the introduction of terminal device capabilities related to the measurement configuration for the terminal device needs be considered.

In embodiments of the disclosure, by generating measurement capability information, in which the measurement capability information is configured to indicate the terminal device capability(capabilities) related to the Synchronization Signal Block Measurement Timing Configuration (SMTC) and/or the Measurement Gap (MG), different terminal devices may balance, based on their own constraints and requirements, the computing processing power, the power consumption and the mobility management performance, to obtain more precise measurement configurations that are more suitable for the terminal devices, thereby effectively improving the communication efficiency of the communication system.

It is understandable that the communication system described in embodiments of the disclosure is to illustrate the technical solution according to embodiments of the disclosure more clearly, and does not constitute a limitation to the technical solution according to embodiments of the disclosure. It can be known by those skilled in the art that, with the evolution of the system architecture and the emergence of new business scenarios, the technical solutions according to embodiments of the disclosure are also applicable to similar technical problems.

Methods and apparatuses for generating measurement capability information according to the disclosure will be described in detail below with reference to the accompanying drawings.

As illustrated in FIG. 2, FIG. 2 is a schematic flowchart illustrating a method for generating measurement capability information according to embodiments of the disclosure. It is noteworthy that the method for generating measurement capability information according to embodiments of the disclosure is performed by a terminal device. As illustrated in FIG. 2, the method may include the following.

At step 201, measurement capability information is generated. The measurement capability information is configured to indicate terminal device capability(capabilities) of a terminal device related to a Synchronization Signal Block Measurement Timing Configuration (SMTC) and/or a Measurement Gap (MG).

The terminal device may generate measurement capability information. The measurement capability information is configured to indicate terminal device capability(capabilities) of the terminal device related to a measurement window configuration. In embodiments of the disclosure, the measurement window configuration includes at least one of a SMTC (or called SSB-MTC) configuration or an MG configuration.

In embodiments of the disclosure, the terminal device may send the generated measurement capability information to the network device, and the network device may configure a corresponding measurement configuration for the terminal device based on the measurement capability information.

The measurement configuration includes the measurement-related configuration of the terminal device, and is not limited to the SMTC and/or MG configuration. That is, the measurement configuration includes a measurement window configuration.

In some embodiments, the measurement capability information includes at least one of:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a NTN;
sixth capability information, configured to indicate maximum total length information of the SMTC and/or MG supported by the terminal device;
seventh capability information, configured to indicate whether the terminal device supports an activation of an SMTC and/or MG configuration; whether the terminal device supports a deactivation of the SMTC and/or MG configuration; or whether the terminal device supports the activation and the deactivation of the SMTC and/or MG configuration.

It is understandable that the measurement capability information may include any one or any multiple of the above seven types of capability information.

It is noteworthy the term "and/or" in the above capability information means that, as a first possible implementation, the capability information indicates capabilities of the terminal device related to the SMTC configuration, as a second possible implementation, the capability information indicates capabilities of the terminal device related to the MG configuration, and as a third possible implementation, the capability information indicates capabilities of the terminal device related to the SMTC and MG configurations.

In some implementations, the first capability information is configured to indicate the number of SMTCs and/or MGs supported by the terminal device, in which the number includes a maximum number.

In some implementations, the second capability information is configured to indicate whether the terminal device supports a first number of SMTCs and/or MGs, where the first number includes a maximum first number.

In embodiments of the disclosure, "the number of SMTCs" described in the capability information is the number of SMTCs configured per measured object or the number of SMTCs configured per measurement frequency, "the number of MGs" described in the capability information is configured per terminal device, or "the number of MGs" described in the capability information is the number of MGs configured for a frequency range (FR1) or another frequency range (FR2).

That is, "the number of STMCs" mentioned in the capability information is for one measured object or one measurement frequency, and the number of SMTCs corresponding to different measured objects and different measurement frequency may be different. Similarly, "the number of MGs" mentioned in the capability information is for one terminal device or one frequency range, and the number of MGS corresponding to different terminal devices and different frequency ranges FR1 and FR2 may be different.

In some implementations, the measurement capability information of the terminal device may further be configured to indicate the capability information per type of period of at least one type of period of the measurement window configuration supported by the terminal device and/or to indicate the capability information per type of length of at least one type of length of the measurement window configuration supported by the terminal device.

In some implementations, the measurement capability information of the terminal device may further be configured to indicate the capability information per type of pattern of at least one type of pattern of the measurement window configuration supported by the terminal device.

The pattern of the measurement window configuration is determined by the period and length of the measurement window configuration.

In some embodiments, the measurement capability information of the terminal device further includes at least one of pattern capability information, period capability information, or length capability information.

The pattern capability information is configured to indicate the capability information per type of pattern of at least one type of pattern of the measurement window configuration supported by the terminal device.

The period capability information is configured to indicate the capability information per type of period of at least one type of period of the measurement window configuration supported by the terminal device.

The length capability information is configured to indicate the capability information per type of length of at least one type of length of the measurement window configuration supported by the terminal device.

In some implementation, the terminal device may send the measurement capability information to the network device.

In some examples, the measurement capability information is contained in information on the terminal device capability(capabilities), as a terminal device capability Information Element (IE) and the terminal device sends the information on the terminal device capability(capabilities) to the network device.

In some examples, the measurement capability is contained in a terminal device capability IE. That is, the terminal device sends the information on the terminal device capability(capabilities) to the network device, in which the information on the terminal device capability(capabilities) includes at least one terminal device capability IE, and the measurement information is included in one terminal device capability IE among the at least one terminal device capability IE.

In some examples, the measurement capability information is included in assistant information, and the terminal device sends the assistant information to the network device.

In embodiments of the disclosure, the terminal device may also receive the measurement configuration sent by the network device.

In some implementations, in response to the measurement configuration not meeting the terminal device capability(capabilities), the terminal device sends an indication to the network device, in which the indication is used for requesting the network device to reconfigure the measurement configuration.

When the measurement configuration received by the terminal device does not meet the terminal device capability(capabilities), the terminal device may send the indication to the network device to request the network device to reconfigure the measurement configuration for the terminal device.

In conclusion, by generating the measurement capability information, in which the measurement capability information is configured to indicate the terminal device capability(capabilities) related to the SMTC and/or the MG of the terminal device, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

As illustrated in FIG. 3, FIG. 3 is a schematic flowchart illustrating a method for generating measurement capability information according to embodiments of the disclosure. It is noteworthy that the method for generating measurement capability information according to embodiments of the disclosure is performed by a terminal device. As illustrated in FIG. 3, the method may include the following.

At step 301, measurement capability information is generated. The measurement capability information includes first capability information.

The first capability information is configured to indicate the number of SMTCs and/or MGs supported by the terminal device.

The number includes a maximum number.

That is, the first capability information may be configured to indicate the number of SMTCs and/or MGs supported by the terminal device, or may be configured to indicate the maximum number of SMTCs and/or MGs supported by the terminal device.

In some implementations, the first capability information is at least configured to: indicate the number of parallel configured SMTCs and/or MGs supported by the terminal device, and/or indicate the number of parallel used SMTCs and/or MGs supported by the terminal device.

In some implementations, the first capability information includes at least one of first configuration capability information or first use capability information.

As a first possible implementation, the first capability information is configured to indicate the number of SMTCs supported by the terminal device.

The first configuration capability information is configured to indicate the number of parallel configured SMTCs supported by the terminal device.

The first use capability information is configured to indicate the number of parallel used SMTCs supported by the terminal device.

For example, the first configuration capability information may be represented by an integer.

As a possible embodiment, the first configuration capability information is expressed as *configsmtcnumber-v17* a, indicating that the terminal device supports to configure a SMTCs in parallel, where 0≤a≤n and n is the maximum number of SMTCs that may be configured specified by the network or the protocol.

In some examples, the first use capability information may be represented by an integer.

As a possible embodiment, the first use capability information is expressed as *usedsmtcnumber-v17* a, indicating that the terminal device supports to use a SMTCs in parallel, where 0≤a≤n and n is the maximum number of SMTCs that may be configured specified by the network or the protocol.

As a second possible implementation, the first capability information is configured to indicate the maximum number of SMTCs supported by the terminal device.

The first configuration capability information is configured to indicate the maximum number of parallel configured SMTCs supported by the terminal device.

The first use capability information is configured to indicate the maximum number of parallel used SMTCs supported by the terminal device.

For example, the first configuration capability information may be represented by an integer.

As a possible embodiment, the first configuration capability information is expressed as *maxconfigsmtcnumber-v17* a, indicating that the terminal device supports to configure in parameter at most a SMTCs, where 0≤a≤n and n is the maximum number of SMTCs that may be configured specified by the network or the protocol.

In some examples, the first use capability information may be represented by an integer.

As a possible embodiment, the first use capability information is expressed as *maxusedsmtcnumber-v17* a, indicating that the terminal device supports to use in parallel at most a SMTCs, where 0≤a≤n, n is the maximum number of SMTCs that may be configured specified by the network or the protocol.

As a third possible implementation, the first capability information is configured to indicate the number of MGs supported by the terminal device.

The first configuration capability information is configured to indicate the number of parallel configured MGs supported by the terminal device.

The first use capability information is configured to indicate the number of parallel used MGs supported by the terminal device.

For example, the first configuration capability information may be represented by an integer.

As a possible embodiment, the first configuration capability information is expressed as *configgapnumber-v17* a, indicating that the terminal device supports to configure in parallel a MGs, where 0≤a≤n and n is the maximum number of MGs that may be configured specified by the network or the protocol.

In some examples, the first use capability information may be represented by an integer.

As a possible embodiment, the first use capability information is expressed as *usedgapnumber-v17* a, indicating that the terminal device supports to use in parallel a MGs, where 0≤a≤n and n is the maximum number of MGs that may be configured specified by the network or the protocol.

As a fourth possible implementation, the first capability information is configured to indicate the maximum number of MGs supported by the terminal device.

The first configuration capability information is configured to indicate the maximum number of parallel configured MGs supported by the terminal device.

The first use capability information is configured to indicate the maximum number of parallel used MGs supported by the terminal device.

For example, the first configuration capability information may be represented by an integer.

As a possible embodiment, the first configuration capability information is expressed as *maxconfiggapnumber-v17* a, indicating that the terminal device supports to configure in parallel at most a MGs, where 0≤a≤n and n is the maximum number of MGs that may be configured specified by the network or the protocol.

In some examples, the first use capability information may be represented by an integer.

As a possible embodiment, the first use capability information is expressed as *maxusedgapnumber-v17* a, indicating that the terminal device supports to use in parallel at most a MGs, where 0≤a≤n and n is the maximum number of MG that may be configured specified by the network or the protocol.

As a fifth possible implementation, the first capability information is configured to indicate the number of SMTCs and MGs supported by the terminal device.

The first configuration capability information is configured to indicate the number of parallel configured SMTCs and MGs supported by the terminal device.

The first use capability information is configured to indicate the number of parallel used SMTCs and MGs supported by the terminal device.

As a sixth possible implementation, the first capability information is configured to indicate the maximum number of SMTCs and MGs supported by the terminal device.

The first configuration capability information is configured to indicate the maximum number of parallel configured SMTCs and MGs supported by the terminal device.

The first use capability information is configured to indicate the maximum number of parallel used SMTCs and MGs supported by the terminal equipment.

In some implementations, the first capability information may also be configured to indicate the number of SMTCs supported by the terminal device corresponding to at least one type of SMTC period supported by the terminal device; and/or indicate the number of MGs supported by the terminal device corresponding to at least one type of MG period supported by the terminal device; and/or indicate the number of SMTCs supported by the terminal device corresponding to at least one type of SMTC length supported by the terminal device; and/or indicate the number of MGs supported by the terminal device corresponding to at least one type of MG length supported by the terminal device.

In some implementations, the first capability information may also be configured to indicate the number of SMTCs supported by the terminal device corresponding to at least one type of SMTC pattern supported by the terminal device; and/or, indicate the number of MGs supported by the terminal device corresponding to at least one type of MG pattern supported by the terminal device.

In some embodiments, the first capability information further includes at least one of first pattern capability information, first period capability information or first length capability information.

The first pattern capability information is configured to indicate the number of SMTCs or a maximum number of SMTCs supported by the terminal device per type of SMTC pattern of at least one type of SMTC pattern supported by the terminal device, and/or indicate the number of MCs or a maximum number of MGs supported by the terminal device per type of MG pattern of at least one type of MG pattern supported by the terminal device.

The first period capability information is configured to indicate the number of SMTCs or the maximum number of SMTCs supported by the terminal device per type of SMTC period of at least one type of SMTC period supported by the terminal device, and/or indicate the number of MCs or the maximum number of MGs supported by the terminal device per type of MG period of at least one type of MG period supported by the terminal device.

The first length capability information is configured to indicate the number of SMTCs or the maximum number of SMTCs supported by the terminal device per type of SMTC length of at least one type of SMTC length supported by the terminal device, and/or indicate the number of MGs or the maximum number of MGs supported by the terminal device per type of MG length of at least one type of MG length supported by the terminal device.

The SMTC pattern is determined by the SMTC length and period configurations. If any of the period and the length is different, a different SMTC pattern will be generated. Each SMTC pattern has a respective SMTC pattern identifier (ID) to distinguish different SMTC patterns.

Similarly, the MG pattern is determined by the MG length and period configurations. If any of the period and the length is different, a different MG pattern will be generated. Each MG pattern has a respective MG pattern ID to distinguish different MG patterns.

For example, the first period capability information may be represented through an integer sequence, and each element in the sequence represents the number of parallel configured SMTCs supported by a corresponding period.

As a possible embodiment, the first period capability information is expressed as *configsmtcnumperperiod SEQUENCE(SIZE (b)) OF INTEGER (0...n),* indicating the number of parallel configured SMTCs supported by the terminal device corresponding to each SMTC period of b types of SMTC period supported by the terminal device, wherein 0≤b≤m, m is the number of SMTC periods that may be configured for the terminal device, n is the maximum number of SMTCs that may be configured specified by the network or the protocol, and SIZE represents a length of the sequence. That is, the length of the sequence is b, and a respective integer at each position of the sequence is the number of parallel configured SMTCs supported by the terminal device corresponding to each type of period. For example, *configsmtcnumperperiod b₁b₂b₃* indicates that the terminal device supports to configure in parallel b₁ SMTCs within the SMTC period 1, the terminal device supports to configure in parallel b₂ SMTCs within the SMTC period 2, and the terminal device supports to configure in parallel b₃ SMTCs within the SMTC period 3.

It is understandable that, in some examples, the values of b₁, b₂ and b₃ may be 0. If b₁=0, it means that the terminal device does not support the period 1. If b₂=0, it means that the terminal device does not support the period 2. If b₃= 0, it means that the terminal device does not support the period 3.

In some examples, the first period capability information may be represented by an integer sequence, and each element in the sequence represents the maximum number of parallel configured SMTCs supported by a corresponding period.

As a possible embodiment, the first period capability information is expressed as *maxconfigsmtcnumperperiod SEQUENCE(SIZE (b)) OF INTEGER (O...n),* indicating the maximum number of parallel configured SMTCs supported by the terminal device corresponding to each type of SMTC period among the b types of SMTC periods supported by the terminal device, where 0≤b≤m, m is the number of SMTC periods that may be configured for the terminal device, n is the maximum number of SMTCs that may be configured specified by the network or the protocol, and SIZE represents a length of the sequence. For example, *maxconfigsmtcnumperperiod b₁b₂b₃* means that the terminal device supports to configure in parallel at most b₁ SMTCs within the SMTC period 1, the terminal device supports to configure in parallel at most b₂ SMTCs within the SMTC period 2, and the terminal device supports to configure in parallel at most b₃ SMTCs within the SMTC period 3.

It is understandable that, in some examples, the values of b₁, b₂, and b₃ may be 0. If b₁=0, it means that the terminal device does not support the period 1. If b₂=0, it means that the terminal device does not support the period 2. If b₃= 0, it means that the terminal device does not support the period 3.

In some examples, the first period capability information may be represented by an integer sequence, and each element in the sequence represents the number of parallel configured MGs supported by a corresponding period.

As a possible embodiment, the first period capability information is expressed as *configgapnumperperiod SEQUENCE(SIZE (b)) OF INTEGER (O...n),* indicating the number of parallel configured MGs supported by the terminal device corresponding to each type of MG period among the b types of MG periods supported by the terminal device, where 0≤b≤m, m is the number of MG periods that may be configured for the terminal device, n is the maximum number of MGs that may be configured specified by the network or the protocol, SIZE represents a length of the sequence, and INTEGER represents an integer. For example, *configgapnumperperiod b₁b₂b₃* indicates that the terminal device supports to configure in parallel b₁ MGs within the MG period 1, the terminal device supports to configure in parallel b₂ MGs within the MG period 2, and the terminal device supports to configure in parallel b₃ MGs within the MG period 3.

It is understandable that, in some examples, the values of b₁, b₂ and b₃ may be 0. If b₁=0, it means that the terminal device does not support the period 1. If b₂=0, it means that the terminal device does not support the period 2. If b₃= 0, it means that the terminal device does not support the period 3.

In some examples, the first period capability information may be represented by an integer sequence, and each element in the sequence represents the maximum number of parallel configured MGs supported by a corresponding period.

As a possible embodiment, the first period capability information is expressed as *maxconfiggapnumperperiod SEQUENCE(SIZE (b)) OF INTEGER (O...n),* indicating the maximum number of parallel configured MGs supported by the terminal device corresponding to each type of MG period among the b types of MG periods supported by the terminal device, where 0≤b≤m, m is the number of MG periods that may be configured for the terminal device, n is the maximum number of MGs that may be configured specified by the network or the protocol, SIZE represents a length of the sequence, and INTEGER represents an integer. For example, *maxconfiggapnumperperiod b₁b₂b₃* means that the terminal device supports to configure in parameter at most b₁ MGs within the MG period 1, the terminal device supports to configure in parameter at most b₂ MGs within the MG period 2; and the terminal device supports to configure in parameter at most b₃ MGs within the MG period 3.

It is understandable that, in some examples, the values of b₁, b₂ and b₃ may be 0. If b₁=0, it means that the terminal device does not support the period 1. If b₂=0, it means that the terminal device does not support the period 2. If b₃= 0, it means that the terminal device does not support the period 3.

In some examples, the first period capability information may be represented by an integer sequence, and each element in the sequence represents the number of parallel used SMTCs supported by a corresponding period.

As a possible embodiment, the first period capability information is expressed as *usedsmtcnumperperiod SEQUENCE(SIZE (b)) OF INTEGER (O...n),* indicating the number of parallel used SMTCs supported by the terminal device corresponding to each type of SMTC period among the b types of SMTC periods supported by the terminal device, wherein, 0≤b≤m, m is the number of SMTC periods that may be configured for the terminal device, n is the maximum number of SMTCs that may be configured specified by the network or the protocol, and SIZE represents a length of the sequence. That is, the length of the sequence is b, and a respective integer at each position in the sequence is the number of parallel used SMTCs supported by the terminal device corresponding to a corresponding period. For example, *usedsmtcnumperperiod b1b2b3* means that the terminal device supports to use in parallel b₁ SMTCs within the SMTC period 1, the terminal device supports to use in parallel b₂ SMTCs within the SMTC period 2, and the terminal device supports to use in parallel b₃ SMTCs within the SMTC period 3.

It is understandable that, in some examples, the values of b₁, b₂ and b₃ may be 0. If b₁=0, it means that the terminal device does not support the period 1. If b₂=0, it means that the terminal device does not support the period 2. If b₃= 0, it means that the terminal device does not support the period 3.

It is understandable that, in some examples, the first period capability information may be configured to indicate the maximum number of parallel used SMTCs supported by the terminal device corresponding to each type of SMTC period among at least one type of SMTC period supported by the terminal device. In some examples, the first period capability information may be represented by an integer sequence, and each element in the sequence represents the number of parallel used SMTCs supported by a corresponding period. For example, *maxusedsmtcnumperperiod b₁b₂b₃* means that the terminal device supports to use in parallel at most b₁ SMTCs within the SMTC period 1, the terminal device supports to use in parallel at most b₂ SMTCs within the SMTC period 2, and the terminal device supports to use in parallel at most b₃ SMTCs within the SMTC period 3. It is understandable that the values of b₁, b₂, and b₃ may be 0. If b₁=0, it means that the terminal device does not support the period 1. If b₂=0, it means that the terminal device does not support the period 2. If b₃=0, it means that the terminal device does not support the period 3.

Similarly, the first period capability information may be configured to indicate the number of parallel used MGs or the maximum number of parallel used MGs supported by the terminal device corresponding to each type of MG period among at least one type of MG period supported by the terminal device, which is similar to the case that the first period capability information indicates the number or the maximum number of SMTCs supported by the terminal device corresponding to each SMTC period and are not repeated here.

It is understandable that representation manners of the first length capability information and the first pattern capability information are similar to those of the first period capability information, which are not repeated here.

At step 302, the measurement capability information is sent to the network device.

In some implementations, the measurement capability information is included in the information on the terminal device capability(capabilities) as a terminal device capability IE, and the terminal device sends the information on the terminal device capability(capabilities) to the network device.

In some implementations, the measurement capability is included in a terminal device capability IE. That is, the terminal device sends the information on the terminal device capability(capabilities) to the network device, in which the information on the terminal device capability(capabilities) includes at least one terminal device capability IE, and the measurement information is included in one terminal device capability IE of the at least one terminal device capability IE.

In some examples, the measurement capability information may be included in measurement and mobility parameters (MeasAndMobParameters), measurement and mobility parameters of multi-radio access technology dual connectivity (Multi-RATDual Connectivity, MRDC) (MeasAndMobParametersMRDC), NR UE Radio Access Capability (UE-NR-Capability) or other terminal equipment capability lEs.

In some implementations, the measurement capability information is included in assistant information, and the terminal device sends the assistant information to the network device.

In step 303, the measurement configuration sent by the network device is received.

The measurement configuration is determined by the network device based on the measurement capability information.

The terminal device receives the measurement configuration determined, based on the measurement capability information, by the network device.

In some implementations, in response to the measurement configuration not meeting the terminal device capability(capabilities), the terminal device sends an indication to the network device, in which the indication is used for requesting the network device to reconfigure the measurement configuration.

When the measurement configuration received by the terminal device does not meet the terminal device capability(capabilities), the terminal device may send the indication to the network device for requesting the network device to reconfigure the measurement configuration for the terminal device.

In conclusion, by generating the measurement capability information, in which the measurement capability information includes the first capability information, by sending the measurement capability information to the network device, and by receiving the measurement configuration sent by the network device, different terminal devices may balance, based on their own restrictions and requirements, the computing processing power, the power consumption, and the mobility management performance, to obtain more precise measurement configurations that are more suitable for the terminal devices respectively, thereby effectively improving the communication efficiency of the communication system.

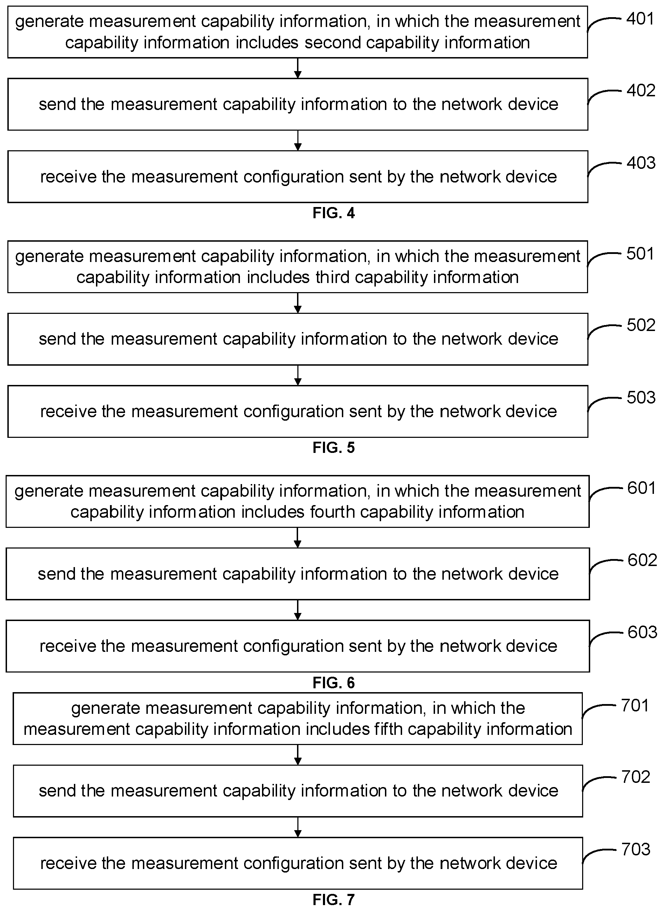

As illustrated in FIG. 4. FIG. 4 is a schematic flowchart illustrating a method for generating measurement capability information according to embodiments of the disclosure. It is noteworthy that the method for generating measurement capability information according to embodiments of the disclosure is performed by a terminal device. As illustrated in FIG. 4, the method may include the following.

In step 401, measurement capability information is generated, in which the measurement capability information includes second capability information.

The second capability information is configured to indicate whether the terminal device supports the first number of SMTCs and/or MGs.

The first number includes a maximum first number.

That is, the second capability information may be configured to indicate whether the terminal device supports the first number of SMTCs and/or MGs, or indicate whether the terminal device supports less than the first number of SMTCs and/or MGs.

In some implementations, the second capability information is at least configured to: indicate whether the terminal device supports to configure in parallel the first number of SMTCs and/or MGs, and/or indicate whether the terminal device supports to use in parallel the first number of SMTCs and/or MGs.

In some implementations, the second capability information includes at least one of second configuration capability information and second use capability information.

As a first possible implementation, the second capability information is configured to indicate whether the terminal device supports the first number of SMTCs.

The second configuration capability information is configured to indicate whether the terminal device supports to configure in parallel the first number of SMTCs.

The second use capability information is configured to indicate whether the terminal device supports to use in parallel the first number of SMTCs.

For example, the second configuration capability information may be represented by an enumeration type, and the optional value is "supported". When it is "supported", it indicates that the terminal device supports to configure in parallel the first number of SMTCs.

As a possible embodiment, the second configuration capability information is expressed as *Xconfigsmtc ENUMERATED {supported},* indicating that the terminal device supports to configure in parallel X SMTCs, where X may be a non-negative integer, such as any of 0, 1, 2, 3, 4 ... It is understandable that X=0 means that the terminal device does not support to configure the SMTC. ENUMERATED means the enumerated type. For example, *2configsmtc ENUMERATED {supported}* means that the terminal device supports to configured in parallel 2 SMTCs.

In some examples, the second use capability information may be represented by an enumeration type, and the optional value is "supported". When it is "supported", it indicates that the terminal device supports to use in parallel the first number of SMTCs.

As a possible embodiment, the second use capability information is expressed as *Xusedsmtc ENUMERATED {supported},* indicating that the terminal device supports to use in parallel X SMTCs, where X may be a non-negative integer, such as any of 0, 1, 2, 3, 4 ... It is understandable that X=0 means that the terminal device does not support to configure the SMTC/ ENUMERATED means an enumerated type. For example, *2usedsmtc ENUMERATED {supported}* indicates that the terminal device supports to use in parallel 2 SMTCs.

In some examples, the terminal device may support multiple types of SMTC quantity, and the second capability information may indicate whether the terminal device supports each of the multiple types of SMTC quantity.

For example, the second configuration capability information may be represented by a bit string, and a respective bit value of each element in the string indicates whether the terminal device supports to configure in parallel a corresponding quantity of SMTCs, where the corresponding quantity is the type of SMTC quantity corresponding to the element.

As a possible embodiment, the second configuration capability information is expressed as *supportedconfigSMTCnumber BIT STRING (SIZE (n)),* where n represents the total number of the types of the SMTC quantities supported by the terminal device that needs to indicate. For example, the second capability information needs to indicate whether the terminal device supports 2 SMTCs or 4 SMTCs, i.e., there are 2 types of SMTC quantity, n=2. SIZE (n) indicates that a length of the bit string is n. In the bit string, the bit value of a bit being 1 indicates that the terminal device supports a corresponding quantity of SMTCs, where the corresponding quantity is the type of SMTC quantity corresponding to the bit, while the bit value being 0 indicates that the terminal device does not support the corresponding quantity of SMTCs. It is understandable that the bit value being 0 may indicate that the terminal device supports the corresponding quantity of SMTCs, while the bit value being 1 indicates that the terminal device does not support the corresponding quantity of SMTCs. For example, it needs to indicate whether the terminal device supports two types of SMTC quantity. If the second configuration capability information is *supportedconfigSMTCnumber 10,* it indicates that the terminal device supports to configure in parallel a first quantity of SMTCs, where the first quantity is the first type of SMTC quantity, but does not support to configure in parallel a second quantity of SMTCs, where the second quantity is the second type of SMTC quantity.

The second use capability information may be represented through a bit string, and a respective bit value of each element in the string indicates whether the terminal device supports to use in parallel a corresponding number of SMTCs, where the corresponding number is the type of SMTC quantity corresponding to the element.

As a possible embodiment, the second use capability information is expressed as *supportedusedSMTCnumber BIT STRING (SIZE (n)),* where n represents a total number of the types of the SMTC quantities supported by the terminal device that needs to indicate. For example, the second capability information needs to indicate whether the terminal device supports 2 SMTCs or 4 SMTCs, i.e., there are 2 types of SMTC quantity and n=2. SIZE (n) indicates that a length of the bit string is n. In the bit string, the bit value of a bit being 1 indicates that the terminal device supports a corresponding quantity of SMTCs, where the corresponding quantity is the type of SMTC quantity corresponding to the bit, while the bit value being 0 indicates that the terminal device does not support the corresponding quantity of SMTCs. It is understandable that the bit value being 0 may indicate that the terminal device supports the corresponding quantity of SMTCs, while the bit value being 1 indicates that the terminal device does not support the corresponding quantity of SMTCs. For example, it needs to indicate whether the terminal device supports two types of SMTC quantity. If the second configuration capability information is *supportedconfigSMTCnumber 01,* it indicates that the terminal device does not support to configure in parallel a first quantity of SMTCs, where the first quantity is the first type of SMTC quantity, but supports to configure in parallel a second quantity of SMTCs, where the second quantity is the second type of SMTC quantity.

As a second possible implementation, the second capability information is configured to indicate whether the terminal device supports no more than the first number of SMTCs.

The second configuration capability information is configured to indicate whether the terminal device supports to configure in parallel no more than the first number of SMTCs.

The second use capability information is configured to indicate whether the terminal device supports to use in parallel no more than the first number of SMTCs.

For example, the second configuration capability information may be represented by an enumeration type, and the optional value is "supported". When it is "supported", it indicates that the terminal device supports to configure in parallel no more than the first number of SMTCs.

As a possible embodiment, the second configuration capability information is expressed as *Xmaxconfigsmtc ENUMERATED {supported},* indicating that the terminal device supports to configure in parallel no more than X SMTCs, where X may be a non-negative integer, such as any of 0, 1, 2, 3, 4 ... It is understandable that X=0 means that the terminal device does not support to configure the SMTC. ENUMERATED means the enumerated type. For example, *2maxconfigsmtc ENUMERATED {supported}* indicates that the terminal device supports to configure in parallel no more than 2 SMTCs.

In some examples, the second use capability information may be represented by an enumeration type, and the optional value is "supported". When it is "supported", it indicates that the terminal device supports to use in parallel no more than the first number of SMTCs.

As a possible embodiment, the second use capability information is expressed as *Xmaxusedsmtc ENUMERATED {supported},* indicating that the terminal device supports to use in parallel no more than X SMTCs, where X may be a non-negative integer, such as any of 0, 1, 2, 3, 4 ... It is understandable that X=0 means that the terminal device does not support to configure the SMTC. The ENUMERATED means the enumerated type. For example, *2maxusedsmtc ENUMERATED {supported}* indicates that the terminal device supports to use in parallel no more than 2 SMTCs.

In some examples, the terminal device may support multiple types of SMTC quantity, and the second capability information may indicate whether the terminal device supports each of the multiple types of SMTC quantity.

As a third possible implementation, the second capability information is configured to indicate whether the terminal device supports the first number of MGs.

The second configuration capability information is configured to indicate whether the terminal device supports to configure in parallel the first number of MGs.

The second use capability information is configured to indicate whether the terminal device supports to use in parallel the first number of MGs.

For example, the second configuration capability information may be represented by an enumeration type, and the optional value is "supported". When it is "supported", it indicates that the terminal device supports to configure in parallel the first number of MGs.

As a possible embodiment, the second configuration capability information is expressed as *Xconfiggap ENUMERATED {supported},* indicating that the terminal device supports to configure in parallel X MGs, where X may be a non-negative integer, such as any of 0, 1, 2, 3, 4 ... It is understandable that X=0 means that the terminal device does not support to configure the MG. The ENUMERATED means the enumerated type. For example, *2configgap ENUMERATED {supported}* indicates that the terminal device supports to configure in parallel 2 MGs.

In some examples, the second use capability information may be represented by an enumeration type, and the optional value is "supported". When it is "supported", it indicates that the terminal device supports to use in parallel the first number of MGs.

As a possible embodiment, the second use capability information is expressed as *Xusedgap ENUMERATED {supported},* indicating that the terminal device supports to use in parallel X MGs, where X may be a non-negative integer, such as any of 0, 1, 2, 3, 4 ... It is understandable that X=0 means that the terminal device does not support to configure the MG. The ENUMERATED means the enumerated type. For example, *2usedgap ENUMERATED {supported}* indicates that the terminal device supports to use in parallel 2 MGs.

In some examples, the terminal device may support multiple types of MG quantity, and the second capability information may indicate whether the terminal device supports each of the multiple types of MG quantity.

For example, the second configuration capability information may be represented by a bit string, and a respective bit value of each element in the string indicates whether the terminal device supports to configure in parallel a corresponding quantity of MGs, where the corresponding quantity is the type of MG quantity corresponding to the element.

As a possible embodiment, the second configuration capability information is expressed as *supportedconfigGAPnumber BIT STRING (SIZE (n)),* where n represents the total number of the types of the MG quantities supported by the terminal device that needs to indicate. For example, the second capability information needs to indicate whether the terminal device supports 2 MGs or 4 MGs, i.e., there are 2 types of MG quantity and n=2. SIZE(n) indicates that a length of the bit string is n. In the bit string, the bit value of a bit being 1 indicates that the terminal device supports a corresponding quantity of MGs, where the corresponding quantity is the type of MG quantity corresponding to the bit, while the bit value being 0 indicates that the terminal device does not support the corresponding quantity of MGs. It is understandable that the bit value being 0 may indicate that the terminal device supports the corresponding quantity of MGs, while the bit value being 1 indicates that the terminal device does not support the corresponding quantity of MGs. For example, it needs to indicate whether the terminal device supports two types of MG quantity. If the second configuration capability information is *supportedconfigGAPnumber 10,* it indicates that the terminal device supports to configure in parallel a first quantity of MGs, where the first quantity is the first type of MG quantity, but does not support to configure in parallel a second quantity of MGs, where the second quantity is the second type of MG quantity.

The second use capability information may be represented by a bit string, and a respective bit value of each element in the string indicates whether the terminal device supports to use in parallel a corresponding number of MGs, where the corresponding number is the type of MG quantity corresponding to the element.

As a possible embodiment, the second use capability information is expressed as *supportedusedGAPnumber BIT STRING (SIZE (n)),* where n represents a total number of the types of the MG quantities supported by the terminal device that needs to indicate. For example, the second capability information needs to indicate whether the terminal device supports 2 MGs or 4 MGs, that is there are 2 types of MG quantity and n=2. SIZE(n) indicates that a length of the bit string is n. In the bit string, the bit value of a bit being 1 indicates that the terminal device supports a corresponding quantity of MGs, where the corresponding quantity is the type of MG quantity corresponding to the bit, while the bit value being 0 indicates that the terminal device does not support the corresponding quantity of MGs. It is understandable that the bit value being 0 may indicate that the terminal device supports the corresponding quantity of MGs, while the bit value being 1 indicates that the terminal device does not support the corresponding quantity of MGs. For example, it needs to indicate whether the terminal device supports two MG quantities of MGs. If the second configuration capability information is *supportedusedGAPnumber 01,* it indicates that the terminal device does not support to configure in parallel a first quantity of MGs, where the first quantity is the first type of MG quantity, but supports to configure in parallel a second quantity of MGs, where the second quantity is the second type of MG quantity.

As a fourth possible implementation, the second capability information is configured to indicate the maximum number of MGs supported by the terminal device.

The second configuration capability information is configured to indicate whether the terminal device supports to configure in parallel no more than the first number of MGs.

The second use capability information is configured to indicate whether the terminal device supports to use in parallel no more than the first number of MGs.

For example, the second configuration capability information may be represented by an enumeration type, and the optional value is "supported". When it is "supported", it indicates that the terminal device supports to configure in parallel no more than the first number of MGs.

As a possible embodiment, the second configuration capability information is expressed as *Xmaxconfiggap ENUMERATED {supported},* indicating that the terminal device supports to configure in parallel no more than X MGs, where X may be a non-negative integer, such as any of 0, 1, 2, 3, 4 ... It is understandable that X=0 means that the terminal device does not support to configure the MG. ENUMERATED means the enumerated type. For example, *2maxconfiggap ENUMERATED {supported}* indicates that the terminal device supports to configure in parallel no more than 2 MGs.

In some examples, the second use capability information may be represented by an enumeration type, and the optional value is "supported". When it is "supported", it indicates that the terminal device supports to use in parallel no more than the first number of MGs.

As a possible embodiment, the second use capability information is expressed as *Xmaxusedgap ENUMERATED {supported},* indicating that the terminal device supports to use in parallel no more than X MGs, where X may be a non-negative integer, such as any of 0, 1, 2, 3, 4 ... It is understandable that X=0 means that the terminal device does not support to configure the MG. The ENUMERATED means the enumerated type. For example, *2maxusedgap ENUMERATED {supported}* indicates that the terminal device supports to use in parallel no more than 2 MGs.

In some examples, the terminal device may support multiple types of MG quantity, and the second capability information may indicate whether the terminal device supports each of the multiple types of MG quantity.

As a fifth possible implementation, the second capability information is configured to indicate whether the terminal device supports the first number of SMTCs and MGs.

The second configuration capability information is configured to indicate whether the terminal device supports to configure in parallel the first number of SMTCs and MGs.

The second use capability information is configured to indicate whether the terminal device supports to use in parallel the first number of SMTCs and MGs.

As a sixth possible implementation, the second capability information is configured to indicate whether the terminal device supports no more than the first number of SMTCs and MGs.

The second configuration capability information is configured to indicate whether the terminal device supports to configure in parallel no more than the first number of SMTCs and MGs.

The second use capability information is configured to indicate whether the terminal device supports to use in parallel no more than the first number of SMTCs and MGs.

In some implementations, the second capability information is further configured to indicate whether the terminal device supports the first number of SMTCs per type of SMTC period of at least one type of SMTC period supported by the terminal device, and/or to indicate whether the terminal device supports the first number of MGs per type of MG period of at least one type of MG period supported by the terminal device, and/or indicate whether the terminal device supports the first number of SMTCs per type of SMTC length of at least one type of SMTC length supported by the terminal device, and/or indicate whether the terminal device supports the first number of MGs per type of MG length of at least one type of MG length supported by the terminal device.

In some implementations, the second capability information is further configured to indicate whether the terminal device supports the first number of SMTCs per type of SMTC pattern of at least one type of SMTC pattern supported by the terminal device, and/or indicate whether the terminal device supports the first number of MGs per type of MG pattern of at least one type of MG pattern supported by the terminal device.

In some embodiments, the second capability information further includes at least one of second pattern capability information, second period capability information or second length capability information.

The second pattern capability information is configured to indicate whether the terminal device supports the first number of SMTCs or no more than the first number of SMTCs per type of SMTC pattern of at least one type of SMTC pattern supported by the terminal device and/or indicate whether the terminal device supports the first number of MGs or no more than the first number of MGs per type of MG pattern of at least one type of MG pattern supported by the terminal device.

The second period capability information is configured to indicate whether the terminal device supports the first number of SMTCs or no more than the first number of SMTCs per type of SMTC period of at least one type of SMTC period supported by the terminal device; and/or indicate whether the terminal device supports the first number of MGs or no more than the first number of MGs per type of MG period of at least one type of MG period supported by the terminal device.

The second length capability information is configured to indicate whether the terminal device supports the first number of SMTCs or no more than the first number of SMTCs per type of SMTC length of at least one type of SMTC length supported by the terminal device, and/or indicate whether the terminal device supports the first number of MGs or no more than the first number of MGs per type of MG length of at least one type of MG length supported by the terminal device.

The SMTC pattern is determined by the SMTC length and period configurations. If any of the period and the length is different, a different SMTC pattern will be generated. Each SMTC pattern has a respective SMTC pattern ID to distinguish different SMTC patterns.

Similarly, the MG pattern is determined by the MG length and period configurations. If any of the period and the length is different, a different MG pattern will be generated. Each MG pattern has a respective MG pattern ID to distinguish different MG patterns.

For example, the second period capability information may be represented through a bit string, and a respective bit value of each element in the string indicates whether the terminal device supports to configure in parallel the first number of SMTCs within a period corresponding to the element.

As a possible embodiment, the second period capability information is expressed as *Xconfigsmtcnumperperiod BIT STRING (SIZE (b)),* indicating whether the terminal device supports to configure in parallel X SMTCs per type of SMTC period of the b types of SMTC period supported by the terminal device, where 0≤b≤m, m is the number of SMTC periods that may be configured for the terminal device, and SIZE indicates a length of the bit string. That is, the length of the bit string is b, and a respective bit value at each position in the string indicates whether the terminal device supports to configure in parallel X SMTCs within each period. In the bit string, the bit value being 1 indicates that the terminal device supports a corresponding-type quantity of SMTCs, while the bit value being 0 indicates that the terminal equipment does not support the corresponding-type quantity of SMTCs. It is understandable that the bit value being 0 indicates that the terminal device supports the corresponding-type quantity of SMTCs, while the bit value being 1 indicates that the terminal device does not support the corresponding-type quantity of SMTCs. For example, *2configsmtcnumperperiod 100* means that the terminal device supports to configure in parallel 2 SMTCs within the SMTC period 1, the terminal device does not support to configure in parallel 2 SMTCs within the SMTC period 2, and the terminal device does not support to configure in parallel 2 SMTCs within the SMTC period 3.

In some examples, the second period capability information may be represented through a bit string, and a respective bit value of each element in the string indicates whether the terminal device supports to configure in parallel no more than the first number of SMTCs within a period corresponding to the element.

As a possible embodiment, the second period capability information is represented as *Xmaxconfigsmtcnumperiod BIT STRING (SIZE (b)),* indicating whether the terminal device supports to configure in parallel no more than X SMTCs per type of SMTC period of the b types of SMTC period supported by the terminal device, where 0≤b≤m, m is the number of SMTC periods that may be configured for the terminal device, and SIZE indicates a length of the bit string. That is, the length of the bit string is b, and a respective bit value at each position in the string indicates whether the terminal device supports to configure in parallel no more than X SMTCs within each period. In the bit string, the bit value of a bit being 1 indicates that the terminal device supports a corresponding-type quantity of SMTCs, while the bit value being 0 indicates that the terminal equipment does not support the corresponding-type quantity of SMTCs. It is understandable that the bit value being 0 indicates that the terminal device supports the corresponding-type quantity of SMTCs, while the bit value being 1 indicates that the terminal device does not support the corresponding-type quantity of SMTCs. For example, *2maxconfigsmtcnumperperiod 110* means that the terminal device supports to configure in parallel no more than 2 SMTCs within the SMTC period 1; the terminal device supports to configure in parallel no more than 2 SMTCs within the SMTC period 2; and the terminal device does not support to configure in parallel no more than 2 SMTCs within the SMTC period 3.

In some examples, the second period capability information may be represented through a bit string, and a respective bit value of each element in the string indicates whether the terminal device supports to configure in parallel the first number of MGs within a period corresponding to the element.

As a possible embodiment, the second period capability information is expressed as *Xconfiggapnumperperiod BIT STRING (SIZE (b)),* indicating whether the terminal device supports to configure in parallel X MGs per type of MG period of the b types of MG period supported by the terminal device, where 0≤b≤m, m is the number of MG periods configured for the terminal device, and SIZE indicates a length of the bit string. That is, the length of the bit string is b, and a respective bit value at each position in the string indicates whether the terminal device supports to configure in parallel X MGs within in each period. In the bit string, the bit value being 1 indicates that the terminal device supports a corresponding-type quantity of MGs, while the bit value being 0 indicates that the terminal device does not support the corresponding-type quantity of MGs. It is understandable that the bit value being 0 indicates that the terminal device supports the corresponding-type quantity of MGs, while the bit value being 1 indicates that the terminal device does not support the corresponding-type quantity of MGs. For example, *2configgapnumperperiod 001* means that the terminal device does not support to configure in parallel 2 MGs within the MG period 1, the terminal device does not support to configure in parallel 2 MGs within the MG period 2, and the terminal device supports to configure in parallel 2 MGs within the MG period 3.

In some examples, the second period capability information may be represented through a bit string, and a respective bit value of each element in the string indicates whether the terminal device supports to configure in parallel no more than the first number of MGs within a period corresponding to the element.

As a possible embodiment, the second period capability information is expressed as *Xmaxconfiggapnumperperiod BIT STRING (SIZE (b)),* indicating whether the terminal device supports to configure in parallel no more than X MGs per type of MG period of the b types of MG period supported by the terminal device, where 0≤b≤m, m is the number of MG periods that may be configured for the terminal device, and SIZE indicates a length of the bit string. That is, the length of the bit string is b, and a respective bit value at each position in the string indicates whether the terminal device supports to configure in parallel no more than X MGs within each period. In the bit string, the bit value of a bit being 1 indicates that the terminal device supports a corresponding-type quantity of MGs, while the bit value being 0 indicates that the terminal device does not support the corresponding-type quantity of MGs. It is understandable that the bit value being 0 indicates that the terminal device supports the corresponding-type quantity of MGs, while the bit value being 1 indicates that the terminal device does not support the corresponding-type quantity of MGs. For example, *2maxconfiggapnumperperiod 111* means that the terminal device supports to configure in parallel no more than 2 MGs within the MG period 1, the terminal device supports to configure in parallel no more than 2 MGs within the MG period 2, and the terminal device supports to configure in parallel no more than 2 MGs within the MG period 2.

In some examples, the second period capability information may be represented through a bit string, and a respective bit value of each element in the string indicates whether the terminal device supports to use in parallel the first number of SMTCs within a period corresponding to the element.

As a possible embodiment, the second period capability information is expressed as Xusedsmtcnumperperiod BIT STRING (SIZE (b)), indicating whether the terminal device supports to use in parallel X SMTCs per type of SMTC period of the b types of SMTC period supported by the terminal device, where 0≤b≤m, m is the number of SMTC periods that may be configured for the terminal device, and SIZE indicates a length of the bit string. That is, the length of the bit string is b, and a respective bit value at each position in the string indicates whether the terminal device supports to use in parallel X SMTCs within each period. In the bit string, the bit value of a bit being 1 indicates that the terminal device supports the corresponding-type quantity of SMTCs, while the bit value being 0 indicates that the terminal device does not support the corresponding-type quantity of SMTCs. It is understandable that the bit value being 0 indicates that the terminal device supports the corresponding-type quantity of SMTCs, while the bit value being 1 indicates that the terminal device does not support the corresponding-type quantity of SMTCs. For example, *2usedsmtcnumperperiod 101* means that the terminal device supports to use in parallel 2 SMTCs within the SMTC period 1, the terminal device does not support to use in parallel 2 SMTCs within the SMTC period 2, and the terminal device supports to use in parallel 2 SMTCs within the SMTC period 3.

It is understandable that, in some examples, the second period capability information may further be configured to indicate whether the terminal device supports to use in parallel no more than the first number of SMTCs per type of SMTC period of at least one type of SMTC period supported by the terminal device. In some examples, the second period capability information may be represented through a bit string, and a respective bit value of each element in the string indicates whether the terminal device supports to use in parallel no more than the first number of SMTCs within a period corresponding to the element. For example, *Xmaxusedsmtcnumperperiod 110* means that the terminal device supports to use in parallel no more than X SMTCs within the SMTC period 1, the terminal device supports to use in parallel no more than X SMTCs within the SMTC period 2, and the terminal device does not support to use in parallel no more than X SMTCs within the SMTC period 3.

Similarly, the second period capability information may further be configured to indicate whether the terminal device supports to use in parallel the first number of MGs or no more than the first number of MGs per type of MG period of at least one MG period supported by the terminal device, which is similar to the case that the second period capability information indicating whether the terminal device supports to use in parallel the first number of SMTCs or no more than the first number of SMTCs per each type of SMTC period and are not repeated here.

It is understandable that the representation manners of the second length capability information and the second pattern capability information are similar to those of the second period capability information, which are not repeated here.

At step 402, the measurement capability information is sent to the network device.

At step 403, the measurement configuration sent by the network device is received.

In embodiment of the disclosure, step 402 and step 403 may be performed in any way described in embodiments of the disclosure, which is not limited in embodiments of the disclosure and will not be repeated here.

In conclusion, by generating the measurement capability information, in which the measurement capability information includes the second capability information, by sending the measurement capability information to the network device, and by receiving the measurement configuration sent by the network device, different terminal devices may balance, based on their own restrictions and requirements, the computing processing power, the power consumption and the mobility management performance, to obtain more precise measurement configurations that are more suitable for the terminal devices respectively, thereby effectively improving the communication efficiency of the communication system.

As illustrated in FIG. 5, FIG. 5 is a schematic flowchart illustrating a method for generating measurement capability information according to embodiments of the disclosure. It is noteworthy that the method for generating measurement capability information according to embodiments of the disclosure is performed by a terminal device. As illustrated in FIG. 5, the method may include the following.

At step 501, measurement capability information is generated, in which the measurement capability information includes third capability information.

The third capability information is configured to indicate whether the terminal device supports an additional SMTC and/or MG.

The number of basic measurement window configurations (SMTCs and/or MGs) of the terminal device is Y, where Y may be a non-negative integer such as any of 0, 1, 2, 3, 4 ... For some terminal devices suitable for special scenarios, the basic measurement configuration may not meet the special scenarios, so some additional measurement configurations may need to be configured. Therefore, an indication for indicating whether the terminal device supports to configure additional SMTC and/or MG is needed.

It is understandable that the number of additionally configured SMTCs and/or MGs may be one or multiple, and the number of additionally configured SMTCs and/or MGs is related to the application scenario required by the terminal device.

For example, the terminal device supports to configure one set of basic SMTC and/or MG. For the terminal device supporting the feature A, the terminal device needs to support 3 additional sets of SMTC and/or MG. Therefore, if supporting to configure the additional SMTC and/or MG, then the terminal device supports to configure at most 4 sets. For the terminal device supporting the feature B, the terminal device needs to support one additional set of SMTC and/or MG. Therefore, if supporting to configure the additional SMTC and/or MG, then the terminal device supports to configure at most 2 sets.

In some implementations, the third capability information is at least configured to: indicate whether the terminal device supports to configure in parallel the additional SMTC and/or MG, and/or indicate whether the terminal device supports to use in parallel the additional SMTC and/or MG.

In some implementations, the third capability information includes at least one of third configuration capability information or third use capability information.

As a first possible implementation, the third capability information is configured to indicate whether the terminal device supports the additional SMTC.

The third configuration capability information is configured to indicate whether the terminal device supports to configure in parallel the additional SMTC.

The third use capability information is configured to indicate whether the terminal device supports to use in parallel the additional SMTC.

For example, the third configuration capability information may be represented through an enumeration type, and the optional value is "supported". When it is "supported", it indicates that the terminal device supports to configure in parallel the additional SMTC.

As a possible embodiment, the third configuration capability information is represented as *configadditinalsmtc ENUMERATED {supported},* indicating that the terminal device supports to configure in parallel the additional SMTC, where ENUMERATED represents an enumerated type.

In some examples, the third use capability information may be represented through an enumeration type, and the optional value is "supported". When it is "supported", it indicates that the terminal device supports to use in parallel the additional SMTC.

As a possible embodiment, the third use capability information is expressed as *useadditinalsmtc ENUMERATED {supported},* indicating that the terminal device supports to use in parallel the additional SMTC, where ENUMERATED indicates an enumerated type.

As a second possible implementation, the third capability information is configured to indicate whether the terminal device supports the additional MG.

The third configuration capability information is configured to indicate whether the terminal device supports to configure in parallel the additional MG.

The third use capability information is configured to indicate whether the terminal device supports to use in parallel the additional MG.

For example, the third configuration capability information may be represented through an enumeration type, and the optional value is "supported". When it is "supported", it indicates that the terminal device supports to configure in parallel the additional MG.

As a possible embodiment, the third configuration capability information is expressed as *configadditinalgap ENUMERATED {supported},* indicating that the terminal device supports to configure in parallel the additional MG, where ENUMERATED indicates an enumerated type.

In some examples, the third use capability information may be represented through an enumeration type, and the optional value is "supported". When it is "supported", it indicates that the terminal device supports to use in parallel the additional MG.

As a possible embodiment, the third use capability information is expressed as *useadditinalgap ENUMERATED {supported},* indicating that the terminal device supports to use in parallel the additional MG, where ENUMERATED indicates an enumeration type.

As a third possible implementation, the third capability information is configured to indicate whether the terminal device supports the additional SMTC and MG.

The third configuration capability information is configured to indicate whether the terminal device supports to configure in parallel the additional SMTC and MG.

The third use capability information is configured to indicate whether the terminal device supports to use in parallel the additional SMTC and MG.

In some implementations, the third capability information is further configured to indicate whether the terminal device supports the additional SMTC per type of SMTC period of at least one type of SMTC period supported by the terminal device; and/or to indicate whether the terminal device supports the additional MG per type of MG period of at least one type of MG period supported by the terminal device; and/or whether the terminal device supports the additional SMTC per type of SMTC length of at least one type Of SMTC length supported by the terminal device; and/or indicate whether the terminal device supports the additional MG per each type of MG length of at least one type of MG length supported by the terminal device.

In some implementations, the third capability information is further configured to indicate whether the terminal device supports the additional SMTC per type of SMTC pattern of at least one type of SMTC pattern supported by the terminal device; and/or indicate whether the terminal device supports the additional MG per type of MG pattern of at least one type of MG pattern supported by the terminal device.

In some embodiments, the third capability information further includes at least one of third pattern capability information, third period capability information or third length capability information.

The third pattern capability information is configured to indicate whether the terminal device supports the additional SMTC per type of SMTC pattern of at least one type of SMTC pattern supported by the terminal device; and/or indicate whether the terminal device supports the additional MG per type of MG pattern of at least one type of MG pattern supported by the terminal device.

The third period capability information is configured to indicate whether the terminal device supports the additional SMTC per each type of SMTC period of at least one type of SMTC period supported by the terminal device; and/or indicate whether the terminal device supports the additional MG per each type of MG period of at least one type of MG period supported by the terminal device.

The third length capability information is configured to indicate whether the terminal device supports the additional SMTC per each type of SMTC length of at least one type of SMTC length supported by the terminal device; and/or indicate whether the terminal device supports the additional MG per each type of MG length of at least one type of MG length supported by the terminal device.

The SMTC pattern is determined by the SMTC length and period configurations. If any of the period and length is different, a different SMTC pattern will be generated. Each SMTC pattern has a corresponding SMTC pattern ID to distinguish different SMTC patterns.

Similarly, the MG pattern is determined by the MG length and period configurations. If any of the period and length is different, a different MG pattern will be generated. Each MG pattern has a corresponding MG pattern ID to distinguish different MG patterns.

For example, the third period capability information may be represented through a bit string, and a respective bit value of each element in the string indicates whether the terminal device supports to configure in parallel the additional SMTC within a period corresponding to the element.

As a possible embodiment, the third period capability information is expressed as configadditinalsmtcnumperperiod BIT STRING (SIZE (b)), indicating whether the terminal device supports to configure in parallel the additional SMTC per type of SMTC period of the b types of SMTC period supported by the terminal device, where 0≤b≤m, m is the number of SMTC periods that may be configured for the terminal device, and SIZE indicates a length of the bit string. That is, the length of the bit string is b, and a respective bit value at each position in the string indicates whether the terminal device supports the additional SMTC within each type of period. In the bit string, the bit value of a bit being 1 indicates that the terminal device supports the additional SMTC within a corresponding period, while the bit value being 0 indicates that the terminal device does not support the additional SMTC within the corresponding period. It is understandable that the bit value being 0 indicates that the terminal device supports the additional SMTC within the corresponding period, while the bit value being 1 indicates that the terminal device does not support the additional SMTC within the corresponding period. For example, *configadditionalsmtcnumperperiod 100* means that the terminal device supports to configure in parallel the additional SMTC within the SMTC period 1; the terminal device does not support to configure in parallel the additional SMTC within the SMTC period 2; and the terminal device does not support to configure in parallel the additional SMTC within the SMTC period 3.

In some examples, the third period capability information may be represented through a bit string, and a respective bit value of each element in the string indicates whether the terminal device supports to configure in parallel the additional MG within a period corresponding to the element.

As a possible embodiment, the third period capability information is expressed as configadditionalgapnumperperiod BIT STRING (SIZE (b)), indicating whether the terminal device supports to configure in parallel the additional MG per type of MG period of the b types of MG period supported by the terminal device, where 0≤b≤m, m is the number of MG periods that may be configured for the terminal device, and SIZE indicates a length of the bit string. That is, the length of the bit string is b, and a respective bit value at each position in the string indicates whether the terminal device supports to configure in parallel the additional MG within each type of period. In the bit string, the bit value being 1 indicates that the terminal device supports the additional MG within a corresponding period, while the bit value being 0 indicates that the terminal device does not support the additional MG within the corresponding period. It is understandable that the bit value being 0 indicates that the terminal device supports the additional MG within the corresponding period, while the bit value being 1 indicates that the terminal device does not support the additional MG within the corresponding period. For example, configadditionalgapnumperperiod 001 means the terminal device does not support to configure in parallel the additional MG within the MG period 1; the terminal device does not support to configure in parallel the additional MG within the MG period 2; and the terminal device supports to configure in parallel the additional MG within the MG period 3.

In some examples, the third period capability information may be represented through a bit string, and a respective bit value of each element in the string indicates whether the terminal device supports to use in parallel the additional SMTC within a period corresponding to the element.

As a possible embodiment, the third period capability information is represented as *useadditionalsmtcnumperperiod BIT STRING (SIZE (b)),* indicating whether the terminal device supports to use in parallel the additional SMTC per type of SMTC if the b types of SMTC period supported by the terminal device, where 0≤b≤m, m is the number of SMTC periods that may be configured for the terminal device, and SIZE indicates a length of the bit string. That is, the length of the bit string is b, and a respective bit value at each position in the string indicates whether the terminal device supports to use in parallel the additional SMTC within each type of period. In the bit string, the bit value of a bit being 1 indicates that the terminal device supports the additional SMTC within a corresponding period, while the bit value being 0 indicates that the terminal device does not support the additional SMTC within the corresponding period. It is understandable that the bit value being 0 indicates that the terminal device supports the additional SMTC within the corresponding period, while the bit value being 1 indicates that the terminal device does not support the additional SMTC within the corresponding period. For example, *useadditionalsmtcnumperperiod 101* means that the terminal device supports to use in parallel the additional SMTC within the SMTC period 1; the terminal device does not support to use in parallel the additional SMTC within the SMTC period 2; and the terminal device supports to use in parallel the additional SMTC within the SMTC period 3.

In some examples, the third period capability information may be represented through a bit string, and a respective bit value of each element in the string indicates whether the terminal device supports to use in parallel the additional MG within a period corresponding to the element.

As a possible embodiment, the third period capability information is expressed as *useadditionalgapnumperperiod BIT STRING (SIZE (b)),* indicating whether the terminal device supports to use in parallel the additional MG per type of MG period of the b types of MG period supported by the terminal device, where 0≤b≤m, m is the number of MG periods that may be configured for the terminal device, and SIZE indicates a length of the bit string. That is, the length of the bit string is b, and a respective bit value at each position in the string indicates whether the terminal device supports to use in parallel the additional MG within each type of period. In the bit string, the bit value being 1 indicates that the terminal device supports the additional MG within a corresponding period, while the bit value being 0 indicates that the terminal device does not support the additional MG within the corresponding period. It is understandable that the bit value being 0 indicates that the terminal device supports the additional MG within the corresponding period, while the bit value being 1 indicates that the terminal device does not support the additional MG within the corresponding period. For example, *useadditionalgapnumperperiod 111* means that the terminal device supports to use in parallel the additional MG within the MG period 1; the terminal device supports to use in parallel the additional MG within the MG period 2; and the terminal device supports to use in parallel the additional MG within the MG period 3.

It is understandable that the representation manners of the third length capability information and the third pattern capability information are similar to those of the third period capability information, which are not repeated here.

At step 502, the measurement capability information is sent to the network device.

At step 503, the measurement configuration sent by the network device is received.

In embodiment of the disclosure, step 502 and step 503 may be performed in any way described in embodiments of the disclosure, which is not limited in embodiments of the disclosure and will not be repeated here.

In conclusion, by generating the measurement capability information, in which the measurement capability information includes the third capability information, by sending the measurement capability information to the network device, and by receiving the measurement configuration sent by the network device, different terminal devices may balance, based on their own restrictions and requirements, the computing processing power, the power consumption and the mobility management performance, to obtain more precise measurement configurations that are more suitable for the terminal devices respectively, thereby effectively improving the communication efficiency of the communication system.

As illustrated in FIG. 6, FIG. 6 is a schematic flowchart illustrating a method for generating measurement capability information according to embodiment of the disclosure. It is noteworthy that the method for generating measurement capability information according to embodiments of the disclosure is performed by a terminal device. As illustrated in FIG. 6, the method may include the following.

At step 601, measurement capability information is generated, in which the measurement capability information includes fourth capability information.

The fourth capability information is configured to indicate a duration between adjacent MGs supported by the terminal device.

For the MG configuration, different terminal devices have different Radio Frequency (RF) conversion capabilities, and the time when the RF conversion is performed is different. Therefore, limitations on the shortest duration between adjacent MGs are different. However, in the related art, the RF conversion capability of the terminal device is not considered when configuring multiple groups of MGs.

In some examples, the limitation on the shortest duration between at least one adjacent MGs supported by the terminal device may be indicated by way of enumeration.

For example, the fourth capability information may be represented through an enumeration type, and selectable values are the shortest duration between adjacent MGs supported by the terminal device.

As a possible embodiment, the fourth capability information may be expressed as *durationofneargaps ENUMERATED {-0.5ms, -0.25ms, 0ms, 0.25ms, 0.5ms, 1ms, 2ms, ...},* where ENUMERATED represents an enumerated type. For example, the selectable value of -0.5ms means that the shortest duration between adjacent MGs supported by the terminal device is limited to -0.5 milliseconds, i.e., two adjacent MGs may overlap by 0.5 milliseconds. The selectable value of 0.5ms means that the shortest duration between adjacent MGs supported by the terminal device is limited to 0.5 milliseconds, that is, two adjacent MGs is spaced by at least 0.5 milliseconds. Similarly, the selectable value of -0.25ms means that the shortest duration between adjacent MGs supported by the terminal device is limited to -0.25 milliseconds, that is, two adjacent MGs may overlap by 0.25 milliseconds. The selectable value of 0.25ms means that the shortest duration between adjacent MGs is limited to 0.25 milliseconds, that is, the shortest duration between two adjacent MGs is 0.25 milliseconds, and so on.

In some examples, the fourth capability information may be represented through an integer type, and the unit of the duration may be millisecond, second, microsecond, or the like.

As a possible embodiment, the fourth capability information may be expressed as *durationofneargaps INTEGER (O...s),* indicating that the shortest duration between adjacent MGs supported by the terminal device is a non-negative integer, where the unit of the duration is millisecond. For example, *durationofneargaps s* indicates that the shortest duration between adjacent MGs supported by the terminal device is limited to s milliseconds.

As a possible embodiment, the fourth capability information may also be expressed as *durationofneargaps INTEGER (-s...s),* indicating that the shortest duration between adjacent MGs supported by the terminal device is an integer, where the unit of the duration is millisecond. For example, *durationofneargaps -s* indicates that the shortest gap between adjacent MGs supported by the terminal device is limited to -s milliseconds, that is, two adjacent MGs may overlap by s milliseconds.

At step 602, the measurement capability information is sent to the network device.

At step 603, the measurement configuration sent by the network device is received.

In embodiments of the disclosure, the step 602 and the step 603 may be implemented in any of embodiments of the disclosure respectively, which is not limited in embodiments of the disclosure and will not be repeated here.

In conclusion, by generating the measurement capability information, in which the measurement capability information includes the fourth capability information, by sending the measurement capability information to the network device, and by receiving the measurement configuration sent by the network device, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

As illustrated in FIG. 7, FIG. 7 is a schematic flowchart illustrating a method for generating measurement capability information according to embodiments of the disclosure. It is noteworthy that the method for generating measurement capability information in embodiments of the disclosure is performed by a terminal device. As illustrated in FIG. 7, the method may include the following.

At step 701, measurement capability information is generated, in which the measurement capability information includes fifth capability information.

The fifth capability information is configured to indicate whether the terminal device supports to access the non-terrestrial network (NTN).

In some examples, the fifth capability information includes release information, and the release information is configured to indicate whether the terminal device supports to access the NTN in the release.

For example, the fifth capability information may be represented through an enumeration type, and the selectable value is "supported". When it is "supported", it indicates that the terminal device supports to access the NTN in this release.

As a possible embodiment, the fifth capability information is expressed as *NTN-r17 ENUMERATED {supported},* indicating that the terminal device supports to access the NTN in Release 17.

At step 702, the measurement capability information is sent to the network device.

At step 703, the measurement configuration sent by the network device is received.

In embodiments of the disclosure, the step 702 and the step 703 may be implemented in any of embodiments of the disclosure respectively, which is not limited in embodiments of the disclosure and will not be repeated here.

In conclusion, by generating the measurement capability information, in which the measurement capability information includes the fifth capability information, by sending the measurement capability information to the network device, and by receiving the measurement configuration sent by the network device, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

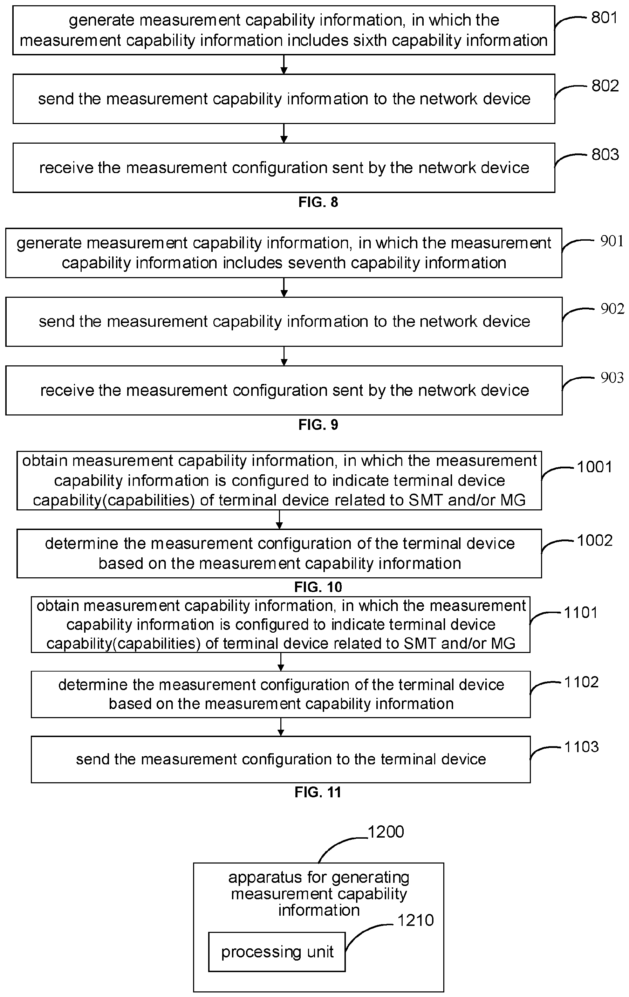

As illustrated in FIG. 8, FIG. 8 is a schematic flowchart illustrating a method for generating measurement capability information according to embodiments of the disclosure. It is noteworthy that the method for generating measurement capability information according to embodiments of the disclosure is performed by a terminal device. As illustrated in FIG. 8, the method may include the following.

At step 801, measurement capability information is generated, in which the measurement capability information includes sixth capability information.

The sixth capability information is configured to indicate maximum total length information of the SMTC and/or MG supported by the terminal device.

In some implementations, the sixth capability information is at least configured to: indicate the maximum total length information of the SMTC supported by the terminal device and/or the maximum total length information of the MG; and/or indicate the maximum total length information of the parallel used SMTCs and/or the maximum total length information of the parallel used MG supported by the terminal device.

In some implementations, the sixth capability information includes at least one of sixth configuration capability information or sixth use capability information.

In some embodiments, the total length information includes at least one of the total length or a total length proportion.

The total length proportion refers to the proportion of the maximum total length of the SMTC or MG supported by the terminal device in the specified duration.

As a first possible implementation, the sixth capability information is configured to indicate the maximum total length of the SMTC supported by the terminal device.

The sixth configuration capability information is configured to indicate the maximum total length of parallel configured SMTCs supported by the terminal device.

The sixth use capability information is configured to indicate the maximum total length of parallel used SMTCs supported by the terminal device.

In some examples, the total length is associated with the period of the MG, and the sixth configuration capability information indicates an association relationship between the maximum total length of the parallel configured SMTCs supported by the terminal device and the period of the MG for a given MG period. The sixth use capability information indicates an association relationship between the maximum total length of parallel used SMTCs supported by the terminal device and the MG period for a given MG period.

In some examples, the total length is associated with a preset duration, the sixth configuration capability information indicates the maximum total length value of the parallel configured SMTCs supported by the terminal device within a given duration, and the sixth use capability information indicates the maximum total length value of parallel used SMTCs supported by the terminal device within the given duration.

As a second possible implementation, the sixth capability information is configured to indicate the maximum total length proportion of the SMTC supported by the terminal device.

The sixth configuration capability information is configured to indicate the maximum total length proportion of the parallel configured SMTCs supported by the terminal device.

The sixth use capability information is configured to indicate the maximum total length proportion of parallel used SMTCs supported by the terminal device.

The total length proportion refers to the proportion of the maximum total length of the SMTC supported by the terminal device in the specified duration.

It is understandable that the specified duration may be specified by the network or the protocol, or determined by the terminal device itself and may be notified to the network device.

For example, the sixth capability information may be represented through an enumeration type, and a selectable value is the proportion of the maximum total length of parallel configured SMTCs supported by the terminal device to the specified duration.

As a possible embodiment, the specified duration is 160 ms, and the sixth capability information may be expressed as *rateofconfigsmtc ENUMERATED {0.025, 0.05, 0.1, 0.15, 0.2, 0.4, 0.8* ..., 1}, indicating the proportion of the maximum total length of the parallel configured SMTCs supported by the terminal device to 160ms, where ENUMERATED indicates an enumerated type. For example, a selectable value of 0.025 means that the proportion of the maximum total length of the parallel configured SMTCs to the specified duration is 0.025, that is, the maximum total length of the parallel configured SMTCs supported by the terminal device is 4ms.

In some examples, the sixth capability information may be represented through an enumeration type, and a selectable value is the proportion of the maximum total length of parallel used SMTCs supported by the terminal device to the specified duration.

As a possible embodiment, the specified duration is 160 ms, and the sixth capability information may be expressed as *rateofusedsmtc ENUMERATED {0.025, 0.05, 0.1, 0.15, 0.2, 0.4, 0.8* ..., *1},* indicating the proportion of the maximum total length of the parallel used SMTCs supported by the terminal device to 160ms, where ENUMERATED indicates an enumerated type. For example, the selectable value of 0.025 means that the proportion of the maximum total length of the parallel used SMTCs to the specified duration is 0.025, that is, the maximum total length of the parallel used SMTCs supported by the terminal device is 4ms.

As a third possible implementation, the sixth capability information is configured to indicate the maximum total length of the MG supported by the terminal device.

The sixth configuration capability information is configured to indicate the maximum total length of parallel configured MGs supported by the terminal device.

The sixth use capability information is configured to indicate the maximum total length of parallel used MGs supported by the terminal device.

In some examples, the total length is associated with the period of the MG, and the sixth configuration capability information indicates an association relationship between the maximum total length of the parallel configured MG supported by the terminal device and the MG period for a given MG period. The sixth use capability information indicates an association relationship between the maximum total length of the parallel used MGs supported by the terminal device and the MG cycle for a given MG period.

IN some examples, the total length is associated with a preset duration, the sixth configuration capability information indicates the maximum total length of the parallel configured MGs supported by the terminal device within a given duration, and the sixth use capability information indicates the maximum total length of the parallel used MGs supported by the terminal device within the given duration.

As a fourth possible implementation, the sixth capability information is configured to indicate the maximum total length proportion of the MG supported by the terminal device.

The sixth configuration capability information is configured to indicate the maximum total length proportion of the parallel configured MGs supported by the terminal device.

The sixth use capability information is configured to indicate the maximum total length proportion of the parallel used MGs supported by the terminal device.

The total length proportion refers to the proportion of the maximum total length of the MG supported by the terminal device to the specified duration.

It is understandable that the specified duration may be specified by the network or the protocol, or determined by the terminal device itself and may be notified to the network device.

For example, the sixth capability information may be represented through an enumeration type, and the selectable value is the proportion of the maximum total length of parallel configured MGs supported by the terminal device to the specified duration.

As a possible embodiment, the specified duration is 160 ms, and the sixth capability information may be expressed as *rateofconfiggap ENUMERATED {0.025, 0.05, 0.1, 0.15, 0.2, 0.4, 0.8* ..., *1},* indicating the proportion of the maximum total length of the parallel configured SMTCs supported by the terminal device to 160ms, where ENUMERATED indicates an enumerated type. For example, the selectable value of 0.05 means that the proportion of the maximum total length of the parallel configured MGs to the specified duration is 0.05, that is, the maximum total length of the parallel configured MGs supported by the terminal device is 8 ms.

In some examples, the sixth capability information may be represented through an enumeration type, and the selectable value is the proportion of the maximum total length of the parallel used MGs supported by the terminal device to the specified duration.

As a possible embodiment, the specified duration is 160 ms, and the sixth capability information may be expressed as rateofusedgap ENUMERATED {0.025, 0.05, 0.1, 0.15, 0.2, 0.4, 0.8 ..., 1}, indicating the proportion of the maximum total length of the parallel used SMTCs supported by the terminal device within 160ms, where ENUMERATED indicates an enumerated type. For example, the selectable value of 0.05 means that the proportion of the maximum total length of the parallel used MGs to the specified duration is 0.05, that is, the maximum total length of the parallel used MGs supported by the terminal device is 8 ms.

As a fifth possible implementation, the sixth capability information is configured to indicate the maximum total length of the SMTC and MG supported by the terminal device.

The sixth configuration capability information is configured to indicate the maximum total length of the parallel configured SMTC and MG supported by the terminal device.

The sixth use capability information is configured to indicate the maximum total length of the parallel used SMTC and MG supported by the terminal device.

As a sixth possible implementation, the sixth capability information is configured to indicate the maximum total length proportion of the SMTC and MG supported by the terminal device.

The sixth configuration capability information is configured to indicate the maximum total length proportion of the parallel configured SMTC and MG supported by the terminal device.

The sixth use capability information is configured to indicate the maximum total length proportion of the parallel used SMTC and MG supported by the terminal device.

As a seventh possible implementation, the sixth capability information is configured to indicate the maximum total length and the maximum total length proportion of the SMTC supported by the terminal device.

The sixth configuration capability information is configured to indicate the maximum total length and the maximum total length proportion of the parallel configured SMTCs supported by the terminal device.

The sixth use capability information is configured to indicate the maximum total length and the maximum total length proportion of the parallel used SMTCs supported by the terminal device.

As an eighth possible implementation, the sixth capability information is configured to indicate the maximum total length and the maximum total length proportion of the MG supported by the terminal device.

The sixth configuration capability information is configured to indicate the maximum total length and the maximum total length proportion of the parallel configured MGs supported by the terminal device.

The sixth use capability information is configured to indicate the maximum total length and the maximum total length proportion of the parallel used MGs supported by the terminal device.

As a ninth possible implementation, the sixth capability information is configured to indicate the maximum total length and the maximum total length proportion of the SMTC and MG supported by the terminal device.

The sixth configuration capability information is configured to indicate the maximum total length and the maximum total length proportion of the parallel configured SMTC and MG supported by the terminal device.

The sixth use capability information is configured to indicate the maximum total length and the maximum total length proportion of the parallel used SMTC and MG supported by the terminal device.

At step 802, the measurement capability information is sent to the network device.

At step 803, the measurement configuration sent by the network device is received.

In embodiments of the disclosure, the step 802 and the step 803 may be implemented in any of embodiments of the disclosure respectively, which is not limited in embodiments of the disclosure and will not be repeated here.

In conclusion, by generating the measurement capability information, in which the measurement capability information includes the sixth capability information, by sending the measurement capability information to the network device, and by receiving the measurement configuration sent by the network device, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

As illustrated in FIG. 9, FIG. 9 is a schematic flowchart illustrating a method for generating measurement capability information according to embodiments of the disclosure. It is noteworthy that the method for generating measurement capability information according to embodiments of the disclosure is performed by a terminal device. As illustrated in FIG. 9, the method may include the following.

At step 901, measurement capability information is generated, in which the measurement capability information includes seventh capability information.

The seventh capability information is configured to indicate whether the terminal device supports an activation of an SMTC and/or MG configuration; or indicate whether the terminal device supports a deactivation of the SMTC and/or MG configuration; or indicate whether the terminal device supports the activation and the deactivation of the SMTC and/or MG configuration.

In some implementations, the seventh capability information is at least configured to: indicate whether the terminal device supports network device-configured activation and/or deactivation of a measurement window configuration; and/or indicate whether the terminal device supports self-activation and/or deactivation of the measurement window configuration.

In some embodiments, the seventh capability information includes at least one of seventh signaling activation capability information or seventh self-activation capability information.

The seventh signaling activation capability information is configured to indicate whether the terminal device supports the network device-configured activation and/or deactivation of the measurement window configuration.

The seventh self-activation capability information is configured to indicate whether the terminal device supports the self-activation and/or deactivation of the measurement window configuration.

In some examples, the seventh signaling activation capability information is configured to indicate whether the terminal device supports the activation and/or deactivation of the measurement window configuration configured by the network device through the Radio Resource Control (RRC).

In some examples, the seventh signaling activation capability information is configured to indicate whether the terminal device supports the activation and/or deactivation of the measurement window configuration configured by the network device through the Media Access Control (MAC) Control Element (CE).

As a first possible implementation, the seventh capability information is configured to indicate whether the terminal device supports the activation of the SMTC, or indicate whether the terminal device supports the deactivation of the SMCT, or to indicate whether the terminal device supports the activation and deactivation of the SMTC.

The seventh signaling activation capability information is configured to indicate whether the terminal device supports the network device-configured activation of the SMTC, or indicate whether the terminal device supports the network device-configured deactivation of the SMTC, or to indicate whether the terminal device supports the network device-configured activation and deactivation of the SMTC.

In some examples, the network device may configure the activation and/or deactivation of the SMTC through at least one of the RRC or the MAC CE.

The seventh self-activation capability information is configured to indicate whether the terminal device supports the terminal device-self activation of the SMTC, or indicate whether the terminal device supports the terminal device self-deactivation of the SMTC, or to indicate whether the terminal device supports to terminal device self-activation and deactivation of the SMTC.

As a second possible implementation, the seventh capability information is configured to indicate whether the terminal device supports the activation of the MG, or indicate whether the terminal device supports the deactivation of the MG, or to indicate whether the terminal device supports the activation and deactivation of the MG.

The seventh signaling activation capability information is configured to indicate whether the terminal device supports the network device-configured activation of the MG, or indicate whether the terminal device supports the network device-configured deactivation of the MG, or indicate whether the terminal device supports the network device-configured activation and deactivation of the MG.

In some examples, the network device may configure the activation and/or deactivation of the MG through at least one of the RRC or the MAC CE.

The seventh self-activation capability information is configured to indicate whether the terminal device supports the terminal device self-activation of the MG, or indicate whether the terminal device supports the terminal device self-deactivation of the MG, or indicate whether the terminal device supports the terminal device self-activation and deactivation of the MG.

As a third possible implementation, the seventh capability information is configured to indicate whether the terminal device supports the activation of the SMTC and the MG, or indicate whether the terminal device supports the deactivation of the SMTC and the MG, or indicate whether the terminal device supports the activation and the deactivation of the SMTC and the MG.

The seventh signaling activation capability information is configured to indicate whether the terminal device supports the network device-configured activation of the SMTC and the MG, or indicate whether the terminal device supports the network device-configured deactivation of the SMTC and the MG, or indicate whether the terminal device supports the network device-configured activation and deactivation of the SMTC and the MG.

In some examples, the network device may configure the activation and/or the deactivation of the SMTC and the MG through at least one of the RRC or the MAC CE.

The seventh self-activation capability information is configured to indicate whether the terminal device supports the terminal device self-activation of the SMTC and the MG, or indicate whether the terminal device supports the terminal device self-deactivation of the SMTC and the MG, or indicate whether the terminal device supports the terminal device self-activation and deactivation of the SMTC and the MG.

In some implementations, the seventh capability information may also be configured to indicate whether the terminal device supports the activation and/or the deactivation of the measurement configuration.

The measurement configuration includes the measurement-related configuration of the terminal device, including, but not limited to, the measurement window configuration (that is, the SMTC and/or MG configuration).

In some examples, the seventh capability information may include at least one of seventh signaling activation capability information or seventh self-activation capability information.

The seventh signaling activation capability information is configured to indicate whether the terminal device supports the network device-configured activation and/or deactivation of the measurement configuration.

The seventh self-activation capability information is configured to indicate whether the terminal device supports the terminal device self-activation and/or deactivation of the measurement configuration.

At step 902, the measurement capability information is sent to the network device.

At step 903, the measurement configuration sent by the network device is received.

In embodiments of the disclosure, the step 902 and the step 903 may be implemented in any one of embodiments of the disclosure, which is not limited in embodiments of the disclosure and will not be repeated here.

In conclusion, by generating the measurement capability information, in which the measurement capability information includes the seventh capability information, by sending the measurement capability information to the network device, and by receiving the measurement configuration sent by the network device, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

It is understandable that the above embodiments are only for the purpose of more clearly describing and explaining the capability information included in the measurement capability information, so only one type of capability information is described in each embodiment, but in the disclosure, the measurement capability information may include any one or any multiple of the capability information described in foregoing embodiments.

As illustrated in FIG. 10, FIG. 10 is a schematic flowchart illustrating a method for a measurement configuration according to embodiments of the disclosure. It is noteworthy that, the method for a measurement configuration according to embodiments of the disclosure is performed by a network device. As illustrated in FIG. 10, the method may include the following.

At step 1001, measurement capability information is obtained, in which the measurement capability information is configured to indicate terminal device capability(capabilities) of the terminal device related to the SMTC and/or the MG.

The terminal device may generate the measurement capability information, in which the measurement capability information is configured to indicate the terminal device capability(capabilities) related to the measurement window configuration. In embodiments of the disclosure, the measurement window configuration includes at least one of the SMTC and MG configuration.

In embodiments of the disclosure, the network device may obtain the measurement capability information, and may determine, based on the measurement capability information, a corresponding measurement configuration configured for the terminal device.

The measurement configuration includes the measurement-related configuration of the terminal device, including, but not limited to, the measurement window configuration (i.e., the SMTC and/or MG configuration).

In some examples, the network device acquires the measurement capability information by receiving information on the terminal device capability(capabilities) sent by the terminal device.

The information on the terminal device capability(capabilities) includes at least one terminal device capability information element (IE). The measurement capability information may be used as a terminal device capability IE, or the measurement capability information is included in the at least one terminal device capability IE.

In some examples, the network device obtains the measurement capability information by receiving assistant information sent by the terminal device, in which the assistant information carries the measurement capability information.

In some embodiments, the measurement capability information includes at least one of:
first capability information, configured to indicate the number of SMTCs and/or MGs supported by the terminal device;
second capability information, configured to indicate whether the terminal device supports the first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access the NTN;
sixth capability information, configured to indicate the maximum total length information of the SMTC and/or MG supported by the terminal device; or
seventh capability information, configured to indicate whether the terminal device supports the activation of the SMTC and/or MG configuration; or indicate whether the terminal device supports the deactivation of the SMTC and/or MG configuration; or indicate whether the terminal device supports the activation and the deactivation of the SMTC and/or MG configuration.

It is understandable that the measurement capability information may include any one or any multiple of the above seven types of capability information.

It is noteworthy that the "and/or" in the above capability information means that, as a first possible implementation, the capability information indicates the capability related to the SMTC configuration of the terminal device, as a second possible implementation, the capability information indicates the capability related to the MG configuration of the terminal device, and as a third possible implementation, the capability information indicates capabilities of the terminal device related to the SMTC and MG configurations.

In some implementations, the first capability information is configured to indicate the number of SMTCs and/or MGs supported by the terminal device, in which the number includes a maximum number.

In some implementations, the second capability information is configured to indicate whether the terminal device supports a first number of SMTCs and/or MGs, in which the first number includes a maximum first number.

In embodiments of the disclosure, "the number of SMTCs" described in the capability information is the number of SMTCs configured per measured object or the number of SMTCs configured per measurement frequency, "the number of MGs" described in the capability information is configured per terminal device, or "the number of MGs" described in the capability information is the number of MGs configured for an FR1 or an FR2.

That is, "the number of STMCs" mentioned in the capability information is for one measured object or one measurement frequency, and the number of SMTCs corresponding to different measured objects and different measurement frequency may be different. Similarly, "the number of MGs" mentioned in the capability information is for one terminal device or one frequency range, and the number of MGS corresponding to different terminal devices and different frequency ranges FR1 and FR2 may be different.

In some implementations, the measurement capability information of the terminal device may further be configured to indicate the capability information per type of period of at least one type of period of the measurement window configuration supported by the terminal device and/or to indicate the capability information per type of length of at least one type of length of the measurement window configuration supported by the terminal device.

In some implementations, the measurement capability information of the terminal device may further be configured to indicate the capability information per type of pattern of at least one type of pattern of the measurement window configuration supported by the terminal device.

The pattern of the measurement window configuration is determined by the period and length of the measurement window configuration.

In some embodiments, the measurement capability information of the terminal device further includes at least one of pattern capability information, period capability information, or length capability information.

The pattern capability information is configured to indicate the capability information per type of pattern of at least one type of pattern of the measurement window configuration supported by the terminal device.

The period capability information is configured to indicate the capability information per type of period of at least one type of period of the measurement window configuration supported by the terminal device.

The length capability information is configured to indicate the capability information per type of length of at least one type of length of the measurement window configuration supported by the terminal device.

At step 1002, the measurement configuration of the terminal device is determined based on the measurement capability information.

The network device may determine the corresponding measurement configuration of the terminal device based on the acquired measurement capability information.

In embodiments of the disclosure, the network device may also send the measurement configuration to the terminal device.

In some implementations, in response to the measurement configuration not meeting the terminal device capability(capabilities), the terminal device sends an indication to the network device, in which the indication is configured to request the network device to reconfigure the measurement configuration.

When the measurement configuration received by the terminal device does not meet the terminal device capability(capabilities), the terminal device may send indication to the network device to request the network device to reconfigure the measurement configuration of the terminal device.

In conclusion, by acquiring the measurement capability information, in which the measurement capability information is configured to indicate the terminal device capability(capabilities) of the terminal device related to the SMTC and/or the MG, and by determining the measurement configuration of the terminal device based on the measurement capability information, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

As illustrated in FIG. 11, FIG. 11 is a schematic flowchart illustrating a method for a measurement configuration according to embodiments of the disclosure. It is noteworthy that, the method for a measurement configuration according to embodiments of the disclosure is performed by a network device. As illustrated in FIG. 11, the method may include the following.

At step 1101, measurement capability information is obtained, in which the measurement capability information is configured to indicate the terminal device capability(capabilities) of the terminal device related to the SMTC and/or the MG.

The terminal device may generate the measurement capability information, in which the measurement capability information is configured to indicate the terminal device capability(capabilities) related to the measurement window configuration. In embodiments of the disclosure, the measurement window configuration includes at least one of SMTC and MG configurations.

In some implementations, the network device obtains the measurement capability information by receiving information on the terminal device capability(capabilities) sent by the terminal device.

In some examples, the measurement capability information may be included in measurement and mobility parameters (MeasAndMobParameters), measurement and mobility parameters of multi-radio access technology dual connectivity (Multi-RATDual Connectivity, MRDC) (MeasAndMobParametersMRDC), NR UE Radio Access Capability (UE-NR-Capability) or other terminal equipment capability lEs.

In some examples, the measurement capability information may also be used as a terminal device capability IE.

In some implementations, the network device obtains the measurement capability information by receiving the assistant information sent by the terminal device, in which the assistant information carries the measurement capability information.

In some embodiments, the measurement capability information includes at least one of the following:
first capability information, configured to indicate the number of SMTCs and/or MGs supported by the terminal device;
second capability information, configured to indicate whether the terminal device supports the first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access the NTN;
sixth capability information, configured to indicate the maximum total length information of the SMTC and/or MG supported by the terminal device; or
seventh capability information, configured to indicate whether the terminal device supports the activation of the SMTC and/or MG configuration; or indicate whether the terminal device supports the deactivation of the SMTC and/or MG configuration; or indicate whether the terminal device supports the activation and the deactivation of the SMTC and/or MG configuration.

It is understandable that the measurement capability information may include any one or any multiple of the above seven types of capability information. The above seven types of capability information are as described in previous embodiments, which are not repeated here. The measurement capability information may include one or more of the capability information described in previous embodiments.

At step 1102, the measurement configuration of the terminal device is determined based on the measurement capability information.

The network device may determine the corresponding measurement configuration of the terminal device based on the obtained measurement capability information.

The measurement configuration includes the measurement-related configuration of the terminal device, including, but is not limited to, the measurement window configuration (i.e., the SMTC and/or MG configuration).

At step 1103, the measurement configuration is sent to the terminal device.

In some implementations, in response to the measurement configuration not meeting the terminal device capability(capabilities), the terminal device sends an indication to the network device, in which the indication information is used for requesting the network device to reconfigure the measurement configuration.

When the measurement configuration received by the terminal device does not meet the terminal device capability(capabilities), the terminal device may send the indication to the network device to request the network device to reconfigure the measurement configuration of the terminal device.

In conclusion, by obtaining the measurement capability information, in which the measurement capability information is configured to indicate the terminal device capability(capabilities) related to the SMTC and/or the MG, and by determining the measurement configuration of the terminal device based on the measurement capability information, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

Corresponding to the methods for generating measurement capability information according to above-mentioned several embodiments, the disclosure further provides apparatuses for generating measurement capability information. Correspondingly, the implementations of the methods for generating measurement capability information are also applicable to the apparatuses for generating measurement capability information according to following embodiments, which will not be described in detail in the following embodiments.

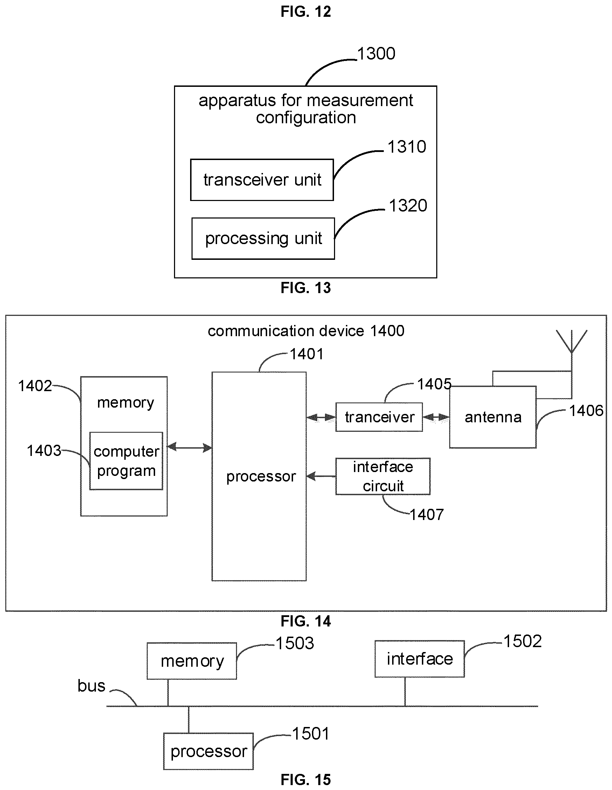

As illustrated in FIG. 12, FIG. 12 is a schematic structural diagram of an apparatus for generating measurement capability information according to embodiments of the disclosure.

As illustrated in FIG. 12, the apparatus 1200 for generating measurement capability information includes: a processing unit 1210.

The processing unit 1210 is configured to generate measurement capability information, in which the measurement capability information is configured to indicate the terminal device capability(capabilities) of the terminal device related to the SMTC and/or the MG.

In some examples, the measurement capability information includes at least one of the following:
first capability information, configured to indicate the number of SMTCs and/or MGs supported by the terminal device;
second capability information, configured to indicate whether the terminal device supports the first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access an NTN;
sixth capability information, configured to indicate the maximum total length information of the SMTC and/or SG supported by the terminal device; or
seventh capability information, configured to indicate whether the terminal device supports activation and/or deactivation of an SMTC and/or MG configuration.

In some examples, the first capability information is at least configured to:
indicate the number of parallel configured SMTCs and/or MGs supported by the terminal device; and/or
indicates the number of parallel used SMTCs and/or MGs supported by the terminal device.

In some examples, the second capability information is at least configured to:
indicate whether the terminal device supports to configure in parallel the first number of SMTCs and/or MGs; and/or
indicate whether the terminal device supports to use in parallel the first number of SMTCs and/or MGs.

In some examples, the third capability information is at least configured to:
indicate whether the terminal device supports to configure in parallel an additional SMTC and/or MG; and/or
indicate whether the terminal device supports to use in parallel an additional SMTC and/or MG.

In some examples, the first capability information is also configured to:
indicate the number of SMTCs supported by the terminal device corresponding to at least one type of SMTC period supported by the terminal device; and/or indicate the number of MGs supported by the terminal device corresponding to at least one type of MG cycle supported by the terminal device; and/or,
indicate the number of SMTCs supported by the terminal device corresponding to at least one type of SMTC length supported by the terminal device; and/or indicate the number of MGs supported by the terminal device corresponding to at least one type of MG length supported by the terminal device.

In some examples, the second capability information is also configured to:
Indicate whether the terminal device supports a first number of SMTCs per type of SMTC period of at least one type of SMTC period supported by the terminal device; and/or indicate whether the terminal device supports a first number of MGs per type of MG period of at least one type of MG period supported by the terminal device; and/or
indicate whether the terminal device supports a first number of SMTCs per type of SMTC length of at least one type of SMTC length supported by the terminal device, and/or indicate whether the terminal device supports a first number of MGs per type of MG length of at least one type of MG length supported by the terminal device.

In some examples, the third capability information is also configured to:
indicate whether the terminal device supports the additional SMTC per type of SMTC period of at least one type of SMTC period supported by the terminal device, and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device, and/or indicate whether the terminal device supports the additional MG per type of MG length of at least one type of MG length supported by the terminal device.

In some examples, the sixth capability information is at least configured to:
indicate the maximum total length information of the parallel configured SMTC and/or the maximum total length information of the parallel configured MG supported by the terminal device; and/or
indicate the maximum total length information of the parallel used SMTC and/or the maximum total length information of the parallel used MG supported by the terminal device.

In some examples, the total length information includes at least one of a total length or a total length proportion.

In some examples, the total length proportion is configured to indicate a proportion of the maximum total length of the SMTC or MG supported by the terminal device to a specified duration.

In some examples, the seventh capability information is at least configured to:
indicate whether the terminal device supports a network device-configured activation and/or deactivation of the SMTC and/or MG configuration; and/or
indicate whether the terminal device supports self-activation and/or deactivation of the SMTC and/or MG configuration.

In some examples, the number of SMTCs is configured per measured object or per measurement frequency; the number of MGs is configured per terminal device; or the number of MGs is configured for a frequency band (FR1) or another frequency band (FR2).

In some examples, the apparatus further includes:
a transceiver unit, configured to send information on the terminal device capability(capabilities) to the network device, in which the information on the terminal device capability(capabilities) includes at least one terminal device capability IE.

The measurement capability information is included in the at least one terminal equipment capability IE; or, the measurement capability information is used as a terminal equipment capability IE.

In some examples, the transceiver unit is further configured to: send assistant information to a network device, in which the assistant information includes the measurement capability information.

In some examples, the apparatus further includes: a transceiver unit, configured to receive a measurement configuration sent by a network device, in which the measurement configuration is determined by the network device based on the measurement capability information.

In some examples, the transceiver unit is further configured to: send an indication to the network device in response to the measurement configuration not satisfying the terminal device capability(capabilities), in which the indication is used for requesting the network device to reconfigure the measurement configuration described above.

With the apparatus for generating measurement capability information according to embodiments, the measurement capability information may be generated, in which the measurement capability information is configured to indicate the terminal device capability(capabilities) of the terminal device related to the SMTC and/or the MG, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system.

As illustrated in FIG. 13, FIG. 13 is a schematic structural diagram illustrating an apparatus for a measurement configuration according to embodiments of the disclosure

As illustrated in FIG. 13, the apparatus 1300 for a measurement includes: a transceiver unit 1310 and a processing unit 1320.

The transceiver unit 1310 is configured to obtain measurement capability information, in which the measurement capability information is configured to indicate the terminal device capability(capabilities) of the terminal device related to the SMTC and/or the MG.

The processing unit 1320 is configured to determine the measurement configuration of the terminal device based on the measurement capability information.

In some examples, the measurement capability information includes at least one of the following:
first capability information, configured to indicate the number of SMTCs and/or MGs supported by the terminal device;
second capability information, configured to indicate whether the terminal device supports the first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access an NTN;
sixth capability information, configured to indicate the maximum total length information of the SMTC and/or MG supported by the terminal device;
seventh capability information, configured to indicate whether the terminal device supports an activation and/or a deactivation of an SMTC and/or MG configuration.

In some examples, the first capability information is at least configured to:
indicate the number of parallel configured SMTCs and/or MGs supported by the terminal device; and/or,
indicate the number of parallel used SMTCs and/or MGs supported by the terminal device.

In some examples, the second capability information is at least configured to:
indicate whether the terminal device supports to configure in parallel the first number of SMTCs and/or MGs; and/or
indicate whether the terminal device supports to use in parallel the first number of SMTCs and/or MGs.

In some examples, the third capability information is at least configured to:
indicate whether the terminal device supports to configure in parallel an additional SMTC and/or MG; and/or
indicate whether the terminal device supports to use in parallel an additional SMTC and/or MG.

In some examples, the first capability information is also configured to:
indicate the number of SMTCs supported by the terminal device corresponding to at least one type of SMTC period supported by the terminal device; and/or indicate the number of MGs supported by the terminal device corresponding to at least one type of MG period supported by the terminal device; and/or
indicate the number of SMTCs supported by the terminal device corresponding to at least one type of SMTC length supported by the terminal device; and/or indicate the number of MGs supported by the terminal device corresponding to at least one type of MG length supported by the terminal device.

In some examples, the second capability information is also configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

In some examples, the third capability information is also configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

In some examples, the sixth capability information is at least configured to:
indicate the maximum total length information of the parallel configured SMTC and/or the maximum total length information of the parallel configured MG supported by the terminal device; and/or
indicate the maximum total length information of the parallel used SMTC and/or the maximum total length information of the parallel used MG supported by the terminal device.

In some examples, the total length information includes at least one of a total length or a total length proportion.

In some examples, the total length proportion is configured to indicate a proportion of the maximum total length of the SMTC or MG supported by the terminal device to a specified duration.

In some examples, the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

In some examples, the number of SMTCs is configured per measured object or per measurement frequency; the number of MGs is configured per terminal device, or the number of MGs is configured for the frequency band (FR1) or another frequency band (FR2).

In some examples, the transceiver unit 1310 is configured to:
receive information on the terminal device capability(capabilities) sent by the terminal device, in which the information on the terminal device capability(capabilities) includes at least one terminal device capability IE;
The measurement capability information is included in the at least one terminal equipment capability IE; or the measurement capability information is used as a terminal equipment capability IE.

In some examples, the transceiver unit 1310 is configured to: receive assistant information sent by the terminal device, in which the assistant information includes the measurement capability information.

In some examples, the transceiver unit 1310 is further configured to: send the measurement configuration to the terminal device.

In some examples, the transceiver unit 1310 is further configured to: in response to the measurement configuration not satisfying the terminal device capability(capabilities), receive an indication sent by the terminal device, in which the indication is used for requesting the network device to reconfigure the measurement configuration.

With the apparatus for the measurement configuration according to embodiments, by obtaining the measurement capability information, in which the measurement capability information is configured to indicate the terminal device capability(capabilities) of the terminal device related to the SMTC and/or the MG, and by determining the measurement configuration of the terminal device based on the measurement capability information, different terminal devices may balance, based on their own constraints and requirements, the computing processing power, the power consumption, and the mobility management performance, to obtain more precise measurement configurations that are more suitable for the terminal devices respectively, thereby effectively improving the communication efficiency of the communication system..

In order to realize above-mentioned embodiments, embodiments of the disclosure also provide a communication device. The communication device includes a processor and a memory. A computer program is stored in the memory. When the processor executes the computer program stored in the memory, the device performs the methods illustrated in embodiments of FIGS. 2 to 9.

In order to realize above-mentioned embodiments, embodiments of the disclosure also provide a communication device. The communication device includes a processor and a memory. A computer program is stored in the memory. When the processor executes the computer program stored in the memory, the device performs the methods illustrated in embodiments of FIGS. 10 and 11.

In order to realize above-mentioned embodiments, embodiments of the disclosure also provide a communication device. The communication device includes a processor and an interface circuit. The interface circuit is configured to receive code instructions and transmit the code instructions to the processor. The processor is configured to run the code instructions to perform the methods illustrated in embodiments of FIGS. 2 to 9.

In order to realize above-mentioned embodiments, embodiments of the disclosure also provide a communication device. The communication device includes a processor and an interface circuit. The interface circuit is configured to receive code instructions and transmit the code instructions to the processor. The processor is configured to run the code instructions to perform the methods illustrated in embodiments of FIGS. 10 and 11.

As illustrated in FIG. 14, FIG. 14 is a schematic structural diagram illustrating another device for generating measurement capability information according to embodiments of the disclosure. The communication device 1400 may be a network device or a terminal device, or a chip, a chip system or a processor that supports the network device to implement the above methods, or a chip, a chip system or a processor that supports the terminal device to implement the above methods. The device may be used to implement the methods described in above method embodiments, and details may refer to the descriptions in above method embodiments.

The communications device 1400 may include one or more processors 1401. The processor 1401 may be a general-purpose processor or a special-purpose processor. For example, the processor may be a baseband processor or a central processing unit. The baseband processor may be used to process communication protocols and communication data. The central processor may be used to control the device for generating measurement capability information (such as a base station, a baseband chip, a terminal device, a terminal device chip, a DU or a CU), execute the computer program, and process data of the computer program.

In some examples, the communication device 1400 may further include one or more memories 1402, on which a computer program 1403 may be stored. When the processor 1401 executes the computer program 1403, the communication device 1400 is caused to perform the methods described in foregoing method embodiments. The computer program 1403 may be solidified in the processor 1401, and in this case, the processor 1401 may be implemented by hardware.

In some examples, the memory 1402 may also have data stored therein. The communication device 1400 and the memory 1402 may be separate components or integrated together.

In some examples, the communication device 1400 may further include a transceiver 1405 and an antenna 1406. The transceiver 1405 may be called a transceiver unit, a transceiver component, or a transceiver circuit, and is configured to implement a transceiver function. The transceiver 1405 may include a receiver and a transmitter. The receiver may be called a receiving unit or a receiving circuit for realizing a receiving function. The transmitter may be called a transmitting unit or a sending circuit for realizing a sending function.

In some examples, the communication device 1400 may further include one or more interface circuits 1407. The interface circuit 1407 is configured to receive code instructions and transmit the code instructions to the processor 1401. The processor 1401 runs the code instructions to enable the communication device 1400 to execute methods described in foregoing method embodiments.

In an implementation, the processor 1401 may include a transceiver for implementing receiving and sending functions. For example, the transceiver may be a transceiver circuit, or an interface, or an interface circuit. The transceiver circuits, interfaces or interface circuits for realizing the functions of receiving and sending may be separated or integrated together. The above-mentioned transceiver circuit, interface or interface circuit may be used for reading and writing code/data, or the above-mentioned transceiver circuit, interface or interface circuit may be used for signal transmission or transmission.

In an implementation, the communication device 1400 may include a circuit. The circuit may implement the function of sending or receiving or communicating in foregoing method embodiments. The processors and transceivers described in this disclosure may be implemented on integrated circuits (ICs), analog ICs, radio frequency integrated circuits (RFICs), mixed-signal ICs, application specific integrated circuits (ASICs), printed circuit boards (PCBs), electronic devices, etc. The processor and transceiver may also be fabricated using various IC process technologies such as complementary metal oxide semiconductor (CMOS), nMetal-oxide-semiconductor (NMOS), positive channel metal oxide semiconductor ( PMOS), bipolar junction transistor (BJT), bipolar CMOS (BiCMOS), silicon germanium (SiGe), or gallium arsenide (GaAs).

The communication device described in above embodiments may be a network device or a terminal device, but the scope of the communication device described in the disclosure is not limited thereto, and the structure of the communication device may not be limited by FIGS. 12 and 13. A communication device may be a stand-alone device or may be part of a larger device. For example a communication device could be:
(1) Stand-alone integrated circuits IC, or chip, or chip system or subsystem;
(2) a set of one or more ICs, for example, the set of ICs may also include storage components for storing data and computer programs;
(3) ASIC, such as Modem;
(4) Module that may be embedded in other devices;
(5) Receiver, terminal device, intelligent terminal device, cellular phone, wireless device, handset, mobile unit, vehicle device, network device, cloud device, artificial intelligence device, etc.;
(6) Others and so on.

For the case where the communication device is a chip or a chip system, FIG. 15 illustrates the schematic structural diagram of the chip. The chip illustrated in FIG. 15 includes a processor 1501 and an interface 1502. The number of processors 1501 may be one or more, and the number of interfaces 1502 may be more than one.

For the case where the chip is used to implement the functions of the network device in embodiments of the disclosure:
the interface 1502 is configured to transmit code instructions to the processor; and
the processor 1501 is configured to run code instructions to perform the methods illustrated in FIG. 2 to FIG. 9.

For the case where the chip is used to implement the functions of the terminal device in embodiments of the disclosure:
the interface 1502 is configured to transmit code instructions to the processor; and
the processor 1501 is configured to run code instructions to perform the methods illustrated in FIG. 10 to 11.

In some examples, the chip further includes a memory 1503 for storing necessary computer programs and data.

Those skilled in the art may also understand that various illustrative logical blocks and steps listed in embodiments of the disclosure may be implemented by electronic hardware, computer software, or a combination of both. Whether such functions are implemented by hardware or software depends on the specific application and overall system design requirements. Those skilled in the art may use various methods to implement functions for each specific application, but such implementation should not be understood as exceeding the protection scope of embodiments of the disclosure.

Embodiments of the disclosure also provide a communication system. The system includes the apparatuses for generating measurement capability information as the terminal device and the apparatuses for a measurement configuration as the network device in aforementioned embodiments illustrated in FIGS. 12-13, or the system includes the communication device as the terminal device and the communication device as the network device in aforementioned embodiments illustrated in FIG. 14.

The disclosure also provides a readable storage medium on which instructions are stored, and when the instructions are executed by a computer, the functions of any one of above method embodiments are realized.

The disclosure also provides a computer program product, which implements the functions of any one of above method embodiments when the computer program product is executed by a computer.

In above embodiments, all or part of them may be implemented by software, hardware, firmware or any combination thereof. When implemented using software, it may be implemented in whole or in part in the form of a computer program product. A computer program product consists of one or more computer programs. When a computer program is loaded and executed on a computer, the processes or functions according to embodiments of the disclosure are generated in whole or in part. A computer nay be a general purpose computer, special purpose computer, computer network, or other programmable device. The computer program may be stored in or transmitted from one computer-readable storage medium to another computer-readable storage medium. For example, the computer program may be transmitted from one website site, computer, server or data center to another website site, computer, server or data center through a wired (such as coaxial cable, optical fiber, digital subscriber line (DSL)) or wireless (such as infrared, wireless, microwave) way. The computer-readable storage medium may be any available medium that may be accessed by a computer, or a data storage device such as a server, a data center, etc. integrated with one or more available media. Available media may be magnetic media (e.g., floppy disk, hard disk, magnetic tape), optical media (e.g., high-density digital video disc (digital video disc, DVD)), or semiconductor media (e.g., solid state disk (solid state disk, SSD).

Those of ordinary skill in the art may understand that the first, second, and other numbers involved in the disclosure are only for convenience of description, and are not used to limit the scope of embodiments of the disclosure, and also indicate the sequence.

The term "at least one" in the disclosure may also be described as one or more, and the terminal "a plurality" may be two, three, four or more, which is not limited in the disclosure. In embodiments of the disclosure, for a technical feature, the technical feature is distinguished by "first", "second", "third", "A", "B", "C" and "D", etc. The technical features described in the "first", "second", "third", "A", "B", "C" and "D" have no sequence or order of magnitude among the technical features described.

The correspondence shown in each table in the disclosure may be configured or predefined. The values of the information in each table are just examples, and may be configured as other values, which are not limited in the disclosure. When configuring the correspondence between the information and each parameter, it is not necessarily required to configure all the correspondences shown in the tables. As an example, in the table in the disclosure, the correspondences shown in some rows may not be configured. As another example, appropriate deformation adjustments may be made based on the above table, for example, splitting, merging, and so on. The names of the parameters shown in the titles of the above tables may also adopt other names understandable by the communication device, and the values or representations of the parameters may also be other values or representations understandable by the communication device. When the above tables are implemented, other data structures may also be used. For example, arrays, queues, containers, stacks, linear tables, pointers, linked lists, trees, graphs, structures, classes, heaps, hash tables or hash tables may be used.

The term "predefined" in the disclosure may be understood as defined, predefined, stored, prestored, pre-negotiated, pre-configured, cured, or pre-fired.

Those skilled in the art may appreciate that the units and algorithm steps of the examples described in conjunction with embodiments disclosed herein may be implemented by electronic hardware, or a combination of computer software and electronic hardware. Whether these functions are executed by hardware or software depends on the specific application and design constraints of the technical solution. Skilled artisans may implement the described functionality using different methods for each particular application, but such implementation should not be considered beyond the scope of the disclosure.

Those skilled in the art may clearly understand that for the convenience and brevity of the description, the specific working process of the above-described system, device and unit may refer to the corresponding process in foregoing method embodiment, which will not be repeated here.

It is understandable that steps may be reordered, added or deleted using the various forms of flow shown above. For example, the steps described in embodiments of the disclosure may be executed in parallel, sequentially, or in a different order, as long as the desired result of the technical solution disclosed in the disclosure is be achieved, which is not limited herein.

The above specific implementation methods do not constitute a limitation to the protection scope of the disclosure. It should be apparent to those skilled in the art that various modifications, combinations, sub-combinations and substitutions may be made depending on design requirements and other factors. Any modifications, equivalent replacements and improvements made within the spirit and principles of the disclosure shall be included within the protection scope of the disclosure.

## Claims

1. A method for generating measurement capability information, performed by a terminal device, comprising:
generating the measurement capability information, wherein the measurement capability information is configured to indicate terminal device capability(capabilities) of the terminal device related to a Synchronization Signal Block Measurement Timing Configuration (SMTC) and/or a Measurement Gap (MG).

2. The method of claim 1, wherein the measurement capability information comprises at least one of:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a Non-terrestrial network (NTN);
sixth capability information, configured to indicate maximum total length information of the SMTC and/or MG supported by the terminal device; or
seventh capability information, configured to indicate whether the terminal device supports an activation and/or a deactivation of an SMTC and/or MG configuration.

3. The method of claim 2, wherein the first capability information is at least configured to:
indicate a number of parallel configured SMTCs and/or MGs supported by the terminal device; and/or
indicate a number of parallel used SMTCs and/or MGs supported by the terminal device.

4. The method of claim 2, wherein the second capability information is at least configured to:
indicate whether the terminal device supports to configure in parallel the first number of SMTCs and/or MGs; and/or
indicate whether the terminal device supports to use in parallel the first number of SMTCs and/or MGs.

5. The method of claim 2, wherein the third capability information is at least configured to:
indicate whether the terminal device supports to configure in parallel the additional SMTC and/or MG; and/or
indicate whether the terminal device supports to use in parallel the additional SMTC and/or MG.

6. The method of claim 3, wherein the first capability information is further configured to:
indicate a number of SMTCs supported by the terminal device corresponding to at least one type of SMTC period supported by the terminal device; and/or indicate a number of MGs supported by the terminal device corresponding to at least one type of MG period supported by the terminal device; and/or
indicate a number of SMTCs supported by the terminal device corresponding to at least one type of SMTC length supported by the terminal device; and/or indicate a number of MGs supported by the terminal device corresponding to at least one type of MG length supported by the terminal device.

7. The method of claim 4, wherein the second capability information is further configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

8. The method of claim 5, wherein the third capability information is further configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

9. The method of claim 2, wherein the sixth capability information is at least configured to:
indicate the maximum total length information of parallel configured SMTCs and/or the maximum total length information of parallel configured MGs supported by the terminal device; and/or
indicate the maximum total length information of parallel used SMTCs and/or the maximum total length information of parallel used MGs supported by the terminal device.

10. The method of claim 9, wherein total length information comprises at least one of a total length or a total length proportion.

11. The method of claim 10, wherein the total length proportion is configured to indicate a proportion of the maximum total length of the SMTC or MG supported by the terminal device to a specified duration.

12. The method of claim 2, wherein the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

13. The method of any one of claims 1 to 12, wherein a number of SMTCs is configured per measured object or per measurement frequency; or a number of MGs is configured per terminal device; or the number of MGs is configured for a frequency range (FR1) or another frequency range (FR2).

14. The method of claim 1, further comprising:
sending information on the terminal device capability(capabilities) to a network device, wherein the information on the terminal device capability(capabilities) comprises at least one terminal device capability information element (IE); and
wherein the measurement capability information is contained in the at least one terminal device capability IE, or the measurement capability information is a terminal device capability IE.

15. The method of claim 14, further comprising:
sending assistant information to the network device, wherein the assistant information comprises the measurement capability information.

16. The method of any one of claims 1 to 12, further comprising:
receiving a measurement configuration sent by a network device, wherein the measurement configuration is determined by the network device based on the measurement capability information.

17. The method of claim 16, further comprising:
sending an indication to the network device in response to the measurement configuration does not meet the terminal device capability(capabilities), wherein the indication is used for requesting the network device to reconfigure the measurement configuration.

18. A method for a measurement configuration, performed by a network device, comprising:
obtaining measurement capability information, wherein the measurement capability information is configured to indicate terminal device capability(capabilities) of a terminal device related to a Synchronization Signal Block Measurement Timing Configuration (SMTC) and/or a Measurement Gap (MG); and
determining the measurement configuration of the terminal device based on the measurement capability information.

19. The method of claim 18, wherein the measurement capability information comprises at least one of:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a Non-terrestrial network (NTN);
sixth capability information, configured to indicate maximum total length information of the SMTC and/or MG supported by the terminal device; or
seventh capability information, configured to indicate whether the terminal device supports an activation and/or a deactivation of an SMTC and/or MG configuration.

20. The method of claim 19, wherein the first capability information is at least configured to:
indicate a number of parallel configured SMTCs and/or MGs supported by the terminal device; and/or
indicate a number of parallel used SMTCs and/or MGs supported by the terminal device.

21. The method of claim 19, wherein the second capability information is at least configured to:
indicate whether the terminal device supports to configured in parallel the first number of SMTCs and/or MGs; and/or
indicate whether the terminal device supports to use in parallel the first number of SMTCs and/or MGs.

22. The method of claim 19, wherein the third capability information is at least configured to:
indicate whether the terminal device supports to configure in parallel the additional SMTC and/or MG; and/or
indicate whether the terminal device supports to use in parallel the additional SMTC and/or MG.

23. The method of claim 20, wherein the first capability information is further configured to:
indicate a number of SMTCs supported by the terminal device corresponding to at least one type of SMTC period supported by the terminal device; and/or indicate a number of MGs supported by the terminal device corresponding to at least one type of MG period supported by the terminal device; and/or
indicate a number of SMTCs supported by the terminal device corresponding to at least one type of SMTC length supported by the terminal device; and/or indicate a number of MGs supported by the terminal device corresponding to at least one type of MG length supported by the terminal device.

24. The method of claim 21, wherein the second capability information is further configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

25. The method of claim 22, wherein the third capability information is further configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

26. The method of claim 19, wherein the sixth capability information is at least configured to:
indicate the maximum total length information of parallel configured SMTCs and/or the maximum total length information of parallel configured MGs supported by the terminal device; and/or
indicate the maximum total length information of parallel used SMTCs and/or the maximum total length information of parallel configured MGs supported by the terminal device.

27. The method of claim 26, wherein total length information comprises at least one of a total length or a total length proportion.

28. The method of claim 27, wherein the total length proportion is configured to indicate a proportion of the maximum total length of the SMTC or MG supported by the terminal device to a specified duration.

29. The method of claim 19, wherein the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

30. The method of any one of claims 19 to 29, wherein the number of SMTCs is configured per measured object or per measurement frequency; or the number of MGs is configured per terminal device; or the number of MGs is configured for a frequency range (FR1) or another frequency range (FR2).

31. The method of claim 19, wherein obtaining the measurement capability information comprises:
receiving information on the terminal device capability(capabilities) sent by the terminal device, wherein the information on the terminal device capability(capabilities) comprises at least one terminal device capability information element (IE); and
wherein the measurement capability information is contained in the at least one terminal device capability IE, or the measurement capability information is a terminal device capability IE.

32. The method of claim 31, wherein obtaining the measurement capability information comprises:
receiving assistant information sent by the terminal device, wherein the assistant information comprises the measurement capability information.

33. The method of any one of claims 19 to 29, further comprising:
sending the measurement configuration to the terminal device.

34. The method of claim 33, further comprising:
receiving an indication sent by the terminal device in response to the measurement configuration does not meet the terminal device capability(capabilities), wherein the indication is used for requesting the network device to reconfigure the measurement configuration.

35. An apparatus for generating measurement capability information, applied to a terminal device, comprising:
a processing unit, configured to generate the measurement capability information, wherein the measurement capability information is configured to indicate terminal device capability(capabilities) of the terminal device related to a Synchronization Signal Block Measurement Timing Configuration (SMTC) and/or a Measurement Gap (MG).

36. The apparatus of claim 35, wherein the measurement capability information comprises at least one of:
first capability information, configured to indicate a number of SMTCs and/or MGs supported by the terminal device;
second capability information, configured to indicate whether the terminal device supports a first number of SMTCs and/or MGs;
third capability information, configured to indicate whether the terminal device supports an additional SMTC and/or MG;
fourth capability information, configured to indicate a duration between adjacent MGs supported by the terminal device;
fifth capability information, configured to indicate whether the terminal device supports to access a Non-terrestrial network (NTN);
sixth capability information, configured to indicate maximum total length information of the SMTC and/or MG supported by the terminal device; or
seventh capability information, configured to indicate whether the terminal device supports an activation and/or a deactivation of an SMTC and/or MG configuration.

37. The apparatus of claim 36, wherein the first capability information is at least configured to:
indicate a number of parallel configured SMTCs and/or MGs supported by the terminal device; and/or
indicate a number of parallel used SMTCs and/or MGs supported by the terminal device.

38. The apparatus of claim 36, wherein the second capability information is at least configured to:
indicate whether the terminal device supports to configure in parallel the first number of SMTCs and/or MGs; and/or
indicate whether the terminal device supports to use in parallel the first number of SMTCs and/or MGs.

39. The apparatus of claim 36, wherein the third capability information is at least configured to:
indicate whether the terminal device supports to configure in parallel the additional SMTC and/or MG; and/or
indicate whether the terminal device supports use in parallel the additional SMTC and/or MG.

40. The apparatus of claim 37, wherein the first capability information is further configured to:
indicate a number of SMTCs supported by the terminal device corresponding to at least one type of SMTC period supported by the terminal device; and/or indicate a number of MGs supported by the terminal device corresponding to at least one type of MG period supported by the terminal device; and/or
indicate a number of SMTCs supported by the terminal device corresponding to at least one type of SMTC length supported by the terminal device; and/or indicate a number of MGs supported by the terminal device corresponding to at least one type of MG length supported by the terminal device.

41. The apparatus of claim 38, wherein the second capability information is further configured to:
indicate whether the terminal device supports the first number of SMTCs per type of SMTC period of at least one type of SMTC period supported by the terminal device; and/or indicate whether the terminal device supports the first number of MGs per type of MG period of at least one type of MG period supported by the terminal device; and/or
indicate whether the terminal device supports the first number of SMTCs per type of SMTC length of at least one type of SMTC length supported by the terminal device; and/or indicate whether the terminal device supports the first number of MGs per type of MG length of at least one type of MG length supported by the terminal device.

42. The apparatus of claim 39, wherein the third capability information is further configured to:
indicate whether the terminal device supports the additional SMTC per type of SMTC period of at least one type of SMTC period supported by the terminal device; and/or indicate whether the terminal device supports the additional MG per type of MG period of at least one type of MG period supported by the terminal device; and/or
indicate whether the terminal device supports the additional SMTC per type of SMTC length of at least one type of SMTC length supported by the terminal device; and/or indicate whether the terminal device supports the additional MG per type of MG length of at least one type of MG length supported by the terminal device.

43. The apparatus of claim 36, wherein the sixth capability information is at least configured to:
the maximum total length information of parallel configured SMTCs and/or MGs supported by the terminal device; and/or
the maximum total length information of parallel used SMTCs and/or MGs supported by the terminal device.

44. The apparatus of claim 43, wherein total length information comprises at least one of a total length or a total length proportion.

45. The apparatus of claim 44, wherein the total length proportion is configured to indicate a proportion of the maximum total length of SMTC or MG supported by the terminal device to a specified duration.

46. The apparatus of claim 36, wherein the seventh capability information is at least configured to:
indicate whether the terminal device supports a network device-configured activation and/or deactivation of the SMTC and/or MG configuration; and/or
indicate whether the terminal device supports a self-activation and/or deactivation of the SMTC and/or MG configuration.

47. The apparatus of any one of claims 35 to 46, wherein the number of SMTCs is configured per measured object or per measurement frequency; or the number of MGs is configured per terminal device; or the number of MGs is configured for a frequency range (FR1) or another frequency range (FR2).

48. The apparatus of claim 35, further comprising:
a transceiver unit, configured to send information on the terminal device capability(capabilities) to a network device, wherein the information on the terminal device capability(capabilities) comprises at least one terminal device capability information element (IE); and
wherein the measurement capability information is contained in the at least one terminal device capability IE, or the measurement capability information is a terminal device capability IE.

49. The apparatus of claim 48, wherein the transceiver unit is further configured to:
send assistant information to a network device, wherein the assistant information comprises the measurement capability information.

50. The apparatus of any one of claims 35 to 46, further comprising:
a transceiver unit, configured to receive a measurement configuration sent by a network device, wherein the measurement configuration is determined by the network device based on the measurement capability information.

51. The apparatus of claim 50, wherein the transceiver unit is further configured to:
send an indication to the network device in response to the measurement configuration does not meet the terminal device capability(capabilities), wherein the indication is used for requesting the network device to reconfigure the measurement configuration.

52. An apparatus for a measurement configuration, applied to a network device, comprising:
a transceiver unit, configured to obtain measurement capability information, wherein the measurement capability information is configured to indicate terminal device capability(capabilities) of a terminal device related to a Synchronization Signal Block Measurement Timing Configuration (SMTC) and/or a Measurement Gap (MG); and
a processing unit, configured to determine the measurement configuration for the terminal device based on the measurement capability information.

53. A communication device, comprising a processor and a memory, wherein the memory has a computer program stored therein, and the processor executes the computer program stored in the memory to cause the device to perform the method of any one of claims 1 to 17.

54. A communication device, comprising a processor and a memory, wherein the memory has a computer program stored therein, and the processor executes the computer program stored in the memory to cause the device to perform the method of any one of claims 18 to 34.

55. A communication device, comprising a processor and an interface circuit;
wherein the interface circuit is configured to receiving code instructions and transmit the code instructions to the processor; and
the processor is configured to run the code instructions to perform the method of any one of claims 1 to 17.

56. A communication device, comprising a processor and an interface circuit;
wherein the interface circuit is configured to receiving code instructions and transmit the code instructions to the processor; and
the processor is configured to run the code instructions to perform the method of any one of claims 18 to 34.

57. A computer readable storage medium, having instructions stored thereon, wherein when the instructions are executed, the method of any one of claims 1 to 17 is performed.

58. A computer readable storage medium, having instructions stored thereon, wherein when the instructions are executed, the method of any one of claims 18 to 34 is performed.
